(19) Europäisches Patentamt
European Patent Office
Office européen des brevets

(11) EP 2 295 481 A1

(12) **EUROPEAN PATENT APPLICATION**
published in accordance with Art. 153(4) EPC

(43) Date of publication:
**16.03.2011 Bulletin 2011/11**

(21) Application number: **09750599.4**

(22) Date of filing: **20.05.2009**

(51) Int Cl.:
***C08F 290/12*** *(2006.01)* ***C08F 8/00*** *(2006.01)*
***C08G 18/67*** *(2006.01)* ***C09D 4/00*** *(2006.01)*
***C09D 133/00*** *(2006.01)* ***C09D 151/08*** *(2006.01)*
***C09D 175/14*** *(2006.01)* ***C09J 4/00*** *(2006.01)*
***C09J 133/00*** *(2006.01)* ***C09J 151/08*** *(2006.01)*
***C09J 175/14*** *(2006.01)*

(86) International application number:
**PCT/JP2009/059265**

(87) International publication number:
**WO 2009/142237 (26.11.2009 Gazette 2009/48)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **23.05.2008 JP 2008135482**
**01.07.2008 JP 2008172536**
**11.11.2008 JP 2008288885**

(71) Applicant: **Showa Denko K.K.**
**Tokyo 105-8518 (JP)**

(72) Inventors:
- **OI, Hiroko**
  **Tokyo 105-8518 (JP)**
- **HATTORI, Yotaro**
  **Tokyo 105-8518 (JP)**
- **ISHII, Nobuaki**
  **Tokyo 105-8518 (JP)**
- **MUROFUSHI, Katsumi**
  **Tokyo 105-8518 (JP)**

(74) Representative: **Strehl Schübel-Hopf & Partner**
**Maximilianstraße 54**
**D-80538 München (DE)**

# (54) CURABLE COMPOSITION CONTAINING A REACTIVE (METH)ACRYLATE POLYMER AND A CURED PRODUCT THEREOF

(57) It is an obj ect of the present invention to provide a curable composition capable of forming a heat-resistant cured film which is excellent in surface hardness, is good also in flexibility and bending properties and has strength and flexibility that are compatible with each other, and a cured product (film) of the composition. The curable composition is **characterized by** comprising a reactive (meth) acrylate polymer (A) having a monomer unit represented by the following formula (1), a polymerization initiator (B) and a reactive monomer(C).

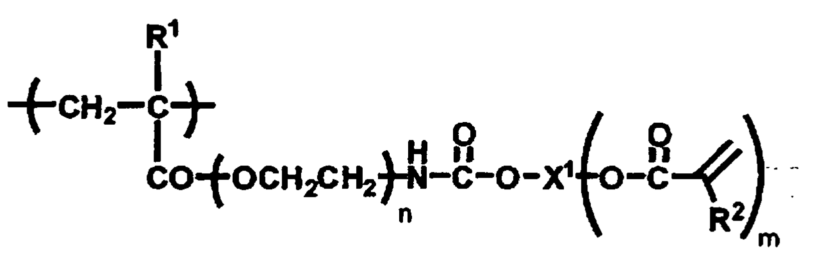

(1)

In the formula (1), $R^1$ is a hydrogen atom, a methyl group or an ethyl group, $R^2$ is a hydrogen atom or a methyl group, $X^1$ is a straight-chain or branched hydrocarbon group of 2 to 6 carbon atoms or an alcohol residue of polyethylene glycol, polypropylene glycol or caprolactone-modified both-terminal diol, n is an integer of 2 to 4, and m is an integer of 1 to 5.

EP 2 295 481 A1

## Description

Technical Field

The present invention relates to a curable composition which is cured by irradiation with active energy rays, such as ultraviolet rays and electron rays, or heating, and cured products of the composition. More particularly, the present invention relates to a curable composition capable of forming cured products having excellent hardness, scratch resistance, heat resistance and flexibility, and cured products of the composition.

Background Art

In the use applications to protective coating members for preventing various base material surfaces from being scratched or being stained, adhesives for various base materials, sealing members, film type liquid crystal elements, touch panels and anti-reflection films for plastic optical parts and the like, a curable composition capable of forming cured films which are excellent in hardness, flexibility, scratch resistance, abrasion resistance, low curling properties, high refractive index, adhesive properties and transparency has been required in recent years. Of such properties required, compatibility of hardness and flexibility with each other has been particularly required recently.
As substrates for liquid crystal display elements, substrates for organic EL display elements, substrates for solar cells, etc. , a large number of glass plates have been used. The glass plates, however, have problems that they are liable to be cracked, cannot be bent and are unsuitable for lightening of weight because of large specific gravity, and therefore, use of plastic materials instead of glass plates as the above substrates has been attempted. Since the plastic materials are generally inferior to glasses in heat resistance, not only compatibility of hardness and flexibility with each other but also heat resistance is required for the plastic materials used as the substrates.
In order to satisfy such requirements, various compositions have been proposed, but under the existing circumstances, any curable composition capable of providing cured films having not only high hardness and high heat resistance but also excellent flexibility has not been obtained yet. More specifically, the following descriptions are given.

(1) In Japanese Patent Laid-Open Publication No. 329738/1994 (patent literature 1), a photo-curable resin composition using alkylene oxide-modified (meth) acrylate of benzyl alcohol as a reactive diluent for the purpose of improving stain resistance, surface hardness, rapid curability, solvent resistance, etc. is described.

However, the main purpose of the above technique is to improve rapid curability, so that a cured product obtained from the above photo-curable resin composition has a defect of poor flexibility though the surface hardness has been taken into account.

(2) In Japanese Patent Laid-Open Publication No. 259644/1996 (patent literature 2), a curable composition using urethane acrylate made from bisphenol type polyol and an ethylenically unsaturated monomer is described. In this literature, studies of improvement in scratch resistance and flexibility have been made. Also in this technique, however, there is yet room for improvement in scratch resistance.

(3) In Japanese Patent No. 2547087 (patent literature 3), polyurethane acrylate in which organic modified polysiloxane having a dimethylsiloxane constituent unit has been blended for the purpose of improving flexibility, stain resistance, scratch resistance and the like is described. However, there is yet room for improvement in surface hardness.
(4) In order to improve surface hardness or reduce shrinkage ratio, there are a method of adding an inorganic filler to a resin, a method of laminating an inorganic film onto a substrate, etc. In the case of adding an inorganic filler to a resin, however, there are problems that transparency is markedly impaired, surface smoothness is lost, the substrate has ununiformity and is liable to be cracked because of poor dispersibility, etc. In the case of laminating an inorganic film, there are problems that peeling, cracking or the like occurs because adhesion to the resin is poor, difference in shrinkage ratio is large, etc.
In Japanese Patent Laid-Open Publication No. 298252/1998 (patent literature 4), there is described a curable composition in which colloidal silica has been homogeneously dispersed in a radical polymerizable vinyl compound such as methyl methacrylate using a silane compound and which has excellent transparency and rigidity. This curable composition has been designed mainly for hard coats and has poor flexibility, and its hardness and flexibility are incompatible with each other, not to mention that the heat resistance is insufficient.
In Japanese Patent Laid-Open Publication No. 157315/1997 (patent literature 5), there is described an ultraviolet ray-curable resin raw material composition comprising a urethane acrylic monomer having a (meth)acryloyloxy group in one molecule, an acrylic monomer having a hydroxyl group, a cyclic ether linkage and a chain ether linkage, and colloidal silica. In this composition, however, the colloidal silica is dispersed in urethane (meth) acrylate, and there is no

chemical linkage between the colloidal silica and the urethane (meth) acrylate, so that desired high elasticity and high heat resistance are not obtained.

Citation List

Patent Literature

Patent literature 1: Japanese Patent Laid-Open Publication No. 329738/1994
Patent literature 2: Japanese Patent Laid-Open Publication No. 259644/1996
Patent literature 3: Japanese Patent No. 2547087
- Patent literature 4: Japanese Patent Laid-Open Publication No. 298252/1998
Patent literature 5: Japanese Patent Laid-Open Publication No. 157315/1997

Summary of Invention

Technical Problem

It is an object of the present invention to provide a curable composition capable of forming a heat-resistant cured film which is transparent, is excellent in surface hardness and heat resistance, is good also in flexibility and bending properties and has strength and flexibility that are compatible with each other, and a cured product (film) of the composition.

Solution to Problem

In order to solve the above problems, the present inventors have earnestly studied, and as a result, they have found that a curable composition comprising a reactive (meth)acrylate polymer (A) having a monomer unit represented by the following formula (1), a polymerization initiator (B) and a reactive monomer (C) can solve the above problems, and they have accomplished the present invention.

That is to say, the present invention is summarized as below.

[1] A curable composition comprising a reactive (meth)acrylate polymer (A) having a monomer unit represented by the following formula (1), a polymerization initiator (B) and a reactive monomer (C),

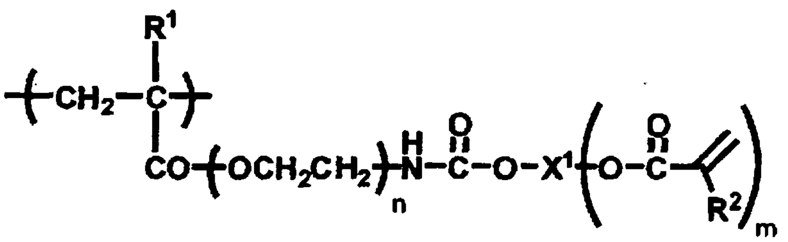

(1)

wherein $R^1$ is a hydrogen atom, a methyl group or an ethyl group, $R^2$ is a hydrogen atom or a methyl group, $X^1$ is a straight-chain or branched hydrocarbon group of 2 to 6 carbon atoms or an alcohol residue of polyethylene glycol, polypropylene glycol or caprolactone-modified both-terminal diol, n is an integer of 2 to 4, and m is an integer of 1 to 5.

[2] The curable composition as stated in [1], wherein the monomer unit represented by the formula (1) is a monomer unit represented by the following formula (2):

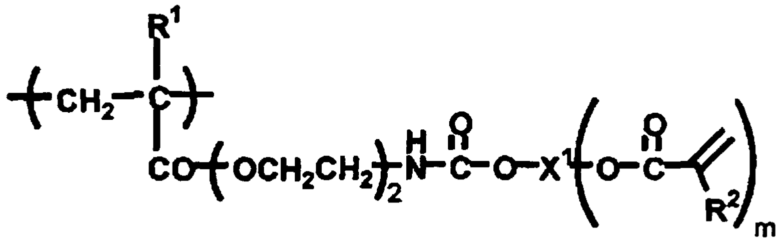

(2)

wherein $R^1$, $R^2$, $X^1$ and m have the same meanings as those of $R^1$, $R^2$, $X^1$ and m in the formula (1).

[3] The curable composition as stated in [2], wherein the monomer unit represented by the formula (1) is a monomer unit represented by any one of the following formulas (3) to (5),

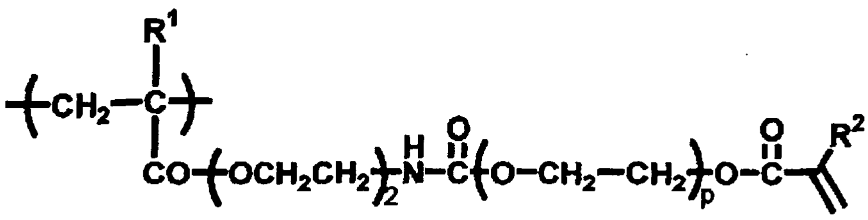

(3)

wherein $R^1$ and $R^2$ have the same meanings as those of $R^1$ and $R^2$ in the formula (1), and p is an integer of 1 to 30,

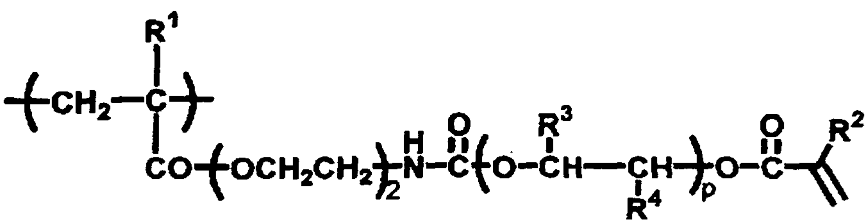

(4)

wherein $R^1$ and $R^2$ have the same meanings as those of $R^1$ and $R^2$ in the formula (1), $R^3$ and $R^4$ are each independently a methyl group or a hydrogen atom, $R^3$ and $R^4$ do not become the same groups, and p is an integer of 1 to 30,

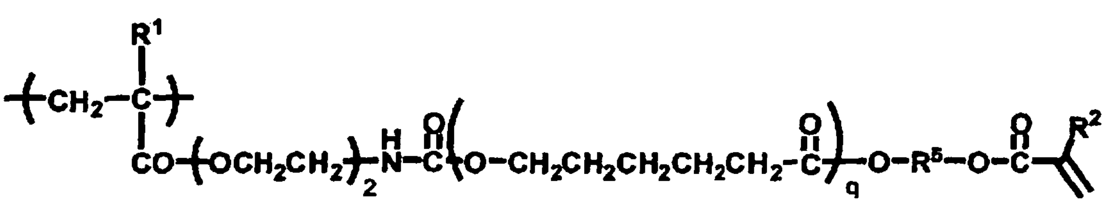

(5)

wherein $R^1$ and $R^2$ have the same meanings as those of $R^1$ and $R^2$ in the formula (1), $R^5$ is a straight-chain or branched alkylene group of 2 to 4 carbon atoms, and q is an integer of 1 to 30.

[4] The curable composition as stated in any one of [1] to [3], which further comprises a urethane oligomer (D).

[5] The curable composition as stated in [4], wherein the urethane oligomer (D) is contained in an amount of 1 to 500 parts by mass based on 100 parts by mass of the reactive (meth)acrylate polymer (A).

[6] The curable composition as stated in any one of [1] to [5], which further comprises silica fine particles (E) having a number-average particle diameter of 1 to 100 nm.

[7] The curable composition as stated in [6], wherein the silica fine particles (E) have been surface-treated with at least one compound selected from the group consisting of a silane compound (F) represented by the formula (6) and a silane compound (G) having an aromatic ring structure and represented by the formula (7),

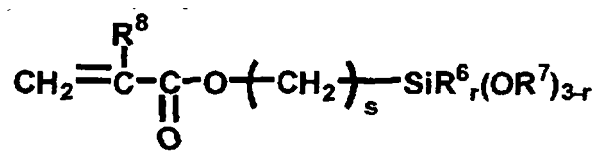

(6)

wherein $R^8$ is a hydrogen atom or a methyl group, $R^6$ is an alkyl group of 1 to 3 carbon atoms or a phenyl group, $R^7$ is a hydrogen atom or a hydrocarbon residue of 1 to 10 carbon atoms, s is an integer of 1 to 6, and r is an integer of 0 to 2,

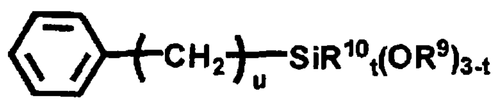

(7)

wherein $R^{10}$ is an alkyl group of 1 to 3 carbon atoms or a phenyl group, $R^9$ is a hydrogen atom or a hydrocarbon residue of 1 to 10 carbon atoms, u is an integer of 0 to 6, and t is an integer of 0 to 2.

[8] The curable composition as stated in [6] or [7], wherein the silica fine particles (E) are contained in an amount of 5 to 1000 parts by mass based on 100 parts by mass of the reactive (meth) acrylate polymer (A).

[9] The curable composition as stated in any one of [1] to [8], wherein the polymerization initiator (B) is contained in an amount of 0.1 to 50 parts by mass based on 100 parts by mass of the total of the curable components.

[10] The curable composition as stated in any one of [1] to [9], wherein the reactive monomer (C) is contained in an amount of 1 to 500 parts by mass based on 100 parts by mass of the reactive (meth)acrylate polymer (A).

[11] The curable composition as stated in any one of [1] to [10], wherein the reactive (meth)acrylate polymer (A) has a double bond equivalent of not more than 1000 g/mol.

[12] A coating material comprising the curable composition as stated in any one of [1] to [11].

[13] An adhesive comprising the curable composition as stated in any one of [1] to [11].

[14] A cured product obtained by curing the curable composition as stated in any one of [1] to [11].

[15] A coating member obtained by curing the curable composition as stated in any one of [1] to [11].

[16] An optical film obtained by curing the curable composition as stated in any one of [1] to [11].

[17] An optical element obtained by curing the curable composition as stated in any one of [1] to [11].

Advantageous Effects of Invention

According to the present invention, a photo-curable composition capable of forming a heat-resistant cured film which is transparent, is excellent in surface hardness, is good also in flexibility and bending properties and has strength and flexibility that are compatible with each other, and a cured product (film) of the composition can be provided by the use of a reactive (meth)acrylate polymer obtained by allowing an isocyanate group of a (meth)acrylic copolymer containing, as a monomer component of the copolymer, a (meth)acrylic compound having an ether linkage and an isocyanate group to react with a compound having active hydrogen.

Description of Embodiments

Embodiments of the present invention are described in detail hereinafter. The curable composition of the present invention (also referred to as a "curable composition" simply hereinafter) is characterized by comprising a reactive (meth) acrylate polymer (A) having a monomer unit represented by the formula (1), a polymerization initiator (B) and a reactive monomer (C), as described above. In the present specification, the expressions " (meth) acrylate" and the like all mean methacrylate and/or acrylate. Moreover, as for the relation of cis/trans in the description of the structure, there is no specific discrimination between them, and both of them are meant.

Reactive (meth)acrylate polymer (A)

The reactive (meth)acrylatepolymer (A) of the present invention has at least a monomer unit represented by the formula (1).

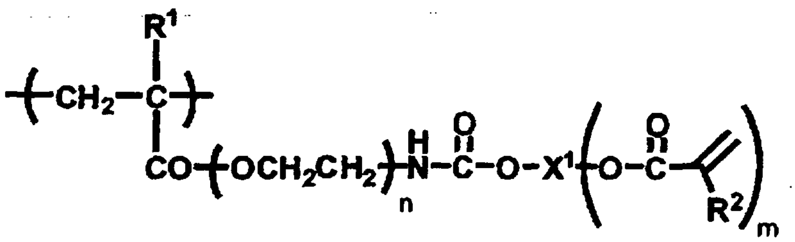

(1)

In the formula (1), $R^1$ is a hydrogen atom, a methyl group or an ethyl group, and from the viewpoint of compatibility of hardness and flexibility with each other, a methyl group is preferable. $R^2$ is a hydrogen atom or a methyl group, and $X^1$ is a straight-chain or branched hydrocarbon group of 2 to 6 carbon atoms, or an alcohol residue of polyethylene glycol, an alcohol residue of polypropylene glycol or an alcohol residue of caprolactone-modified alcohol. Here, the alcohol residue means a structure obtained by removing OH group from an alcohol. n is an integer of 2 to 4, and m is an integer of 1 to 5.

Of the structures of (1), preferable is a structure represented by the following formula (2), and more preferable are structures represented by the following formulas (3) to (5).

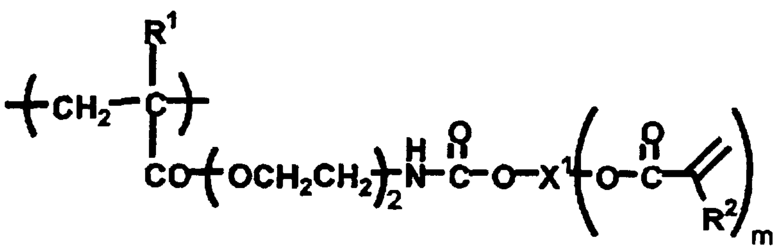

(2)

In the formula (2), $R^1$ and $R^2$ have the same meanings as those of $R^1$ and $R^2$ in the formula (1), and $X^1$ has the same meaning as that of $X^1$ in the formula (1).

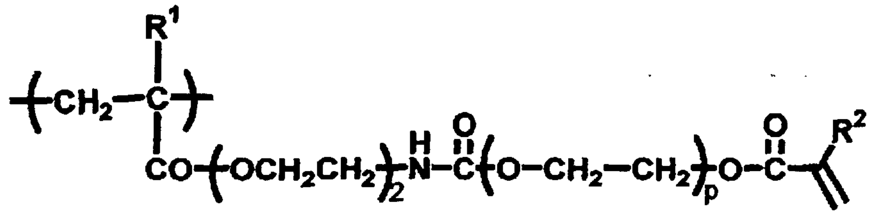

(3)

In the formula (3), $R^1$ and $R^2$ have the same meanings as those of $R^1$ and $R^2$ in the formula (1), and p is an integer of 1 to 30.

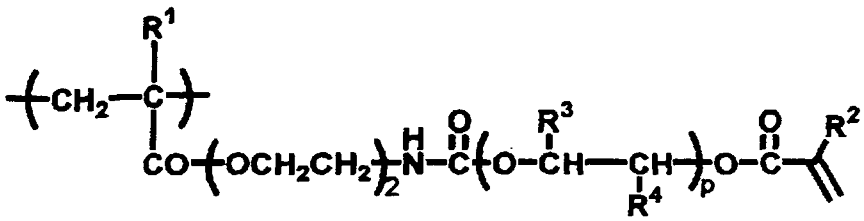

(4)

In the formula (4), $R^1$ and $R^2$ have the same meanings as those of $R^1$ and $R^2$ in the formula (1), $R^3$ and $R^4$ are each independently a methyl group or a hydrogen atom, $R^3$ and $R^4$ do not become the same groups, and p is an integer of 1 to 30.

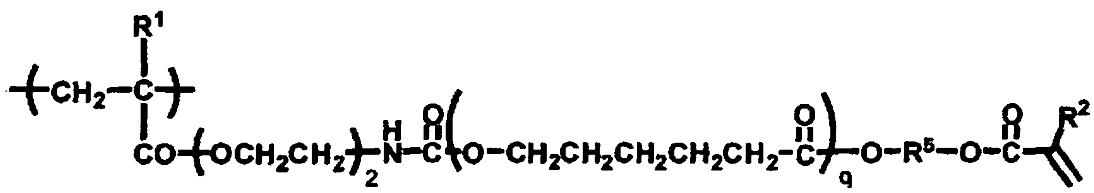

(5)

In the formula (5), $R^1$ and $R^2$ have the same meanings as those of $R^1$ and $R^2$ in the formula (1), $R^5$ is a straight-chain or branched alkylene group of 2 to 4 carbon atoms, and q is an integer of 1 to 30.

The weight-average molecular weight of the reactive (meth)acrylate polymer (A) of the present invention in terms of polystyrene, as measured by GPC, is in the range of 1000 to 30000, preferably 2000 to 25000, more preferably 2500 to 20000. If the weight-average molecular weight is less than 1000, the polymer is difficult to sufficiently exhibit toughness characteristic of a copolymerization polymer. If the weight-average molecular weight exceeds 30000, coating properties of the resin composition are liable to be impaired because of too high viscosity.

By incorporating the reactive (meth)acrylate polymer (A) into the curable composition, a cured product having an excellent balance between flexibility and surface hardness is obtained. That is to say, high qualities of various products composed of the cured products of the present invention can be attained.

The reactive (meth)acrylate polymer (A) can be obtained by homopolymerizing an isocyanate compound represented by the following formula (8) using its carbon-carbon double bond or copolymerizing it with another compound having a carbon-carbon double bond to synthesize a (meth)acrylic homopolymer or a (meth)acrylic copolymer and then allowing the polymer to react with an alcohol having a (meth)acryloyloxy group. The isocyanate compound of the following formula (8) is an unsaturated group-containing isocyanate compound having a polyethylene glycol skeleton, and in particular, 2-(2-methacryloyloxy)ethoxyethyl isocyanate is preferable.

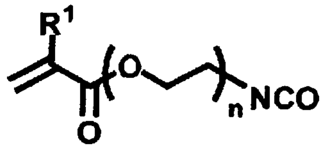

(8)

In the formula (8), $R^1$ and n have the same meanings as those of $R^1$ and n in the formula (1).
In the polymerization unit of the (meth)acrylic (co)polymer, therefore, the compound of the formula (8) is contained as an essential component, and if necessary, (a1) another (meth)acrylic compound having an isocyanate group, (a2) a (meth) acrylic compound having an alicyclic skeleton or a heterocyclic skeleton and (a3) another compound having a carbon-carbon double bondmay be contained as copolymerization units. In the present specification, the (co)polymer means a copolymer or a homopolymer.

Examples of the compounds (a1) include 2-(meth)acryloyloxyethyl isocyanate, 3-(meth)acryloyloxypropyl isocyanate, 4-(meth)acryloylbutyl isocyanate, 5-(meth)acryloyloxypentyl isocyanate, 6-(meth)acryloyloxyhexyl isocyanate, 3-(meth)acryloyloxyphenyl isocyanate and 4-(meth)acryloyloxyphenyl isocyanate. Other (meth)acrylic compounds having an isocyanate groupmaybe also used. These compounds may be used singly, or may be used in combination of two or more kinds.

Examples of the compounds (a2) include cycloalkyl (meth) acrylates, such as cyclohexyl (meth) acrylate, dicyclopentanyl (meth)acrylate, dicyclopentenyl (meth)acrylate, norbornyl (meth)acrylate, isobornyl (meth)acrylate, tricyclodecanyl (meth) acrylate and morpholinyl (meth)acrylate. These compounds may be used singly, or may be used in combination of two or more kinds.

Of these, isobornyl (meth)acrylate, tricyclodecanyl (meth)acrylate and morpholinyl (meth)acrylate are preferable, and tricyclodecanyl (meth)acrylate is most preferable, from the viewpoints that the glass transition temperature is high and high strength is obtained. The following formulas (9-a) to (9-c) represent monomer units obtained from isobornyl (meth)acrylate, tricyclodecanyl (meth)acrylate and morpholinyl (meth)acrylate, respectively.

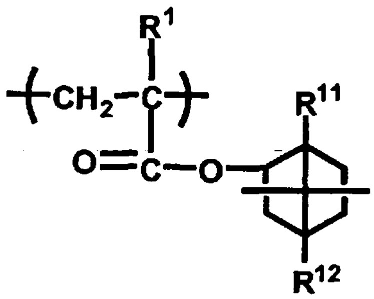

(9-a)

In the formula (9-a), $R^1$ has the same meaning as that of $R^1$ in the formula (1), one of $R^{11}$ and $R^{12}$ is always a methyl group, and the other is always a hydrogen atom.

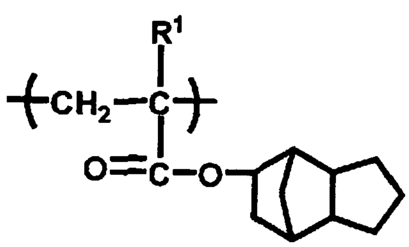

(9-b)

In the formula (9-b), $R^1$ has the same meaning as that of $R^1$ in the formula (1).

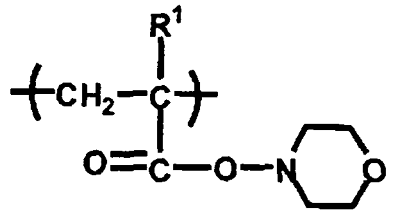

(9-c)

In the formula (9-c), $R^1$ has the same meaning as that of $R^1$ in the formula (1).

The copolymerization ratio of the compound (a1) is not specifically restricted, but from the viewpoint of compatibility of strength and flexibility with each other, the total of the compound of the formula (8) and the compound (a1) is preferably not less than 40% by mol, more preferably not less than 80% by mol, based on all the monomers to constitute the (meth) acrylic (co)polymer. If the total of the compound of the formula (8) and the compound (a1) is less than 40% by mol, crosslink density of the cured product is not sufficiently obtained, and there is a fear of insufficient strength.

The ratio between the compound of the formula (8) and the compound (a1) is as follows. That is to say, the ratio of the compound (a1) to the compound of the formula (8) is preferably not more than 80% by mass, more preferably not more than 75% by mass.

The copolymerization ratio of the compound (a2) is not specifically restricted, but from the viewpoint of compatibility of strength and flexibility with each other, the copolymerization ratio of the compound (a2) is preferably not more than 60% by mol, more preferably not more than 20% by mol, based on all the monomers to constitute the (meth) acrylic (co)polymer. If the copolymerization ratio of the compound (a2) is more than 60% by mol, there is a fear that the crosslink density is not obtained sufficiently. Moreover, solubility of the reactive (meth) acrylate polymer (A) is decreased, or crystallizability of the polymer (A) is increased, and hence handling properties are liable to be lowered.

Examples of other compounds (a3) having a carbon-carbon double bond include ethylenically unsaturated aromatic compounds, such as styrene, α-methylstyrene, o-methylstyrene, m-methylstyrene, p-methylstyrene, p-tert-butylstyrene, o-chlorostyrene, m-chlorostyrene, p-chlorostyrene, 1,1-diphenylethylene, p-methoxystyrene, N,N-dimethyl-p-aminostyrene, N,N-diethyl-p-aminostyrene, ethylenically unsaturated pyridine and ethylenically unsaturated imidazole; carboxyl group-containing compounds, such as (meth)acrylic acid, crotonic acid, maleic acid, fumaric acid and itaconic acid; alkyl (meth) acrylates, such as methyl (meth) acrylate, ethyl (meth)acrylate, propyl (meth)acrylate, isopropyl (meth)acrylate, butyl (meth)acrylate, isobutyl (meth)acrylate, tert-butyl (meth)acrylate, pentyl (meth)acrylate, amyl (meth) acrylate,isoamyl(meth)acrylate,hexyl(meth)acrylate,heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate and isostearyl (meth)acrylate; fluoroalkyl (meth) acrylates, such as trifluoroethyl (meth)acrylate, tetrafluoropropyl (meth)acrylate, hexafluoroisopropyl (meth)acrylate, octafluoropentyl (meth)acrylate and heptadecafluorodecyl (meth)acrylate; hydroxyalkyl (meth)acrylates, such as hydroxyethyl (meth)acrylate, hydroxypropyl (meth)acrylate and hydroxybutyl (meth) acrylate; phenoxyalkyl (meth) acrylates, such as phenoxyethyl (meth)acrylate and 2-hydroxy-3-phenoxypropyl (meth)acrylate; alkoxyalkyl (meth)acrylates, such as methoxyethyl (meth)acrylate, ethoxyethyl (meth)acrylate, propoxyethyl (meth)acrylate, butoxyethyl (meth)acrylate and methoxybutyl (meth)acrylate; polyethylene glycol (meth)acrylates, such as polyethylene glycol mono (meth)acrylate, ethoxydiethylene glycol (meth)acrylate, methoxypolyethylene glycol (meth)acrylate, phenoxypolyethylene glycol (meth)acrylate and nonylphenoxypolyethylene glycol (meth)acrylate; polypropylene glycol (meth)acrylates, such as polypropylene glycol (meth)acrylate, methoxypolypropylene glycol (meth)acrylate, ethoxypolypropylene glycol (meth)acrylate and nonylphenoxypolypropylene glycol (meth)acrylate; cycloalkyl (meth)acrylates, such as cyclohexyl (meth)acrylate, 4-butylcyclohexyl (meth)acrylate, dicyclopentanyl (meth)acrylate, dicyclopentenyl (meth)acrylate, dicyclopentadienyl (meth) acrylate, bornyl (meth)acrylate, isobornyl (meth) acrylate and tricyclodecanyl (meth)acrylate; benzyl (meth)acrylate, and tetrahydrofurfuryl (meth)acrylate. These compounds may be used singly, or may be used in combination of two or more kinds.

In the synthesis of the (meth) acrylic (co) polymer, a chain transfer agent may be used in combination. The chain transfer agent used is not specifically restricted, but from the viewpoints of reactivity and properties of the resin, a compound having a mercapto group is preferably used. Examples of such compounds include monofunctional thiol compounds, such as 2-mercaptoethanol, mercaptobenzene and dodecyl mercaptan, and polyfunctional thiol compounds.

Examples of the polyfunctional thiols include ethylene glycol bis(3-mercaptobutyrate), propylene glycol bis(3-mercaptobutyrate), diethylene glycol bis(3-mercaptobutyrate), butanediol bis(3-mercaptobutyrate), octanediol bis(3-mercaptobutyrate), trimethylolpropane tris(3-mercaptobutyrate), pentaerythritol tetrakis(3-mercaptobutyrate), dipentaerythritol hexakis(3-mercaptobutyrate), ethylene glycol bis(2-mercaptopropionate), propylene glycol bis(2-mercaptopropionate), diethylene glycol bis(2-mercaptopropionate), butanediol bis(2-mercaptopropionate), octanediol bis(2-mercaptopropionate), trimethylolpropane tris(2-mercaptopropionate), pentaerythritol tetrakis(2-mercaptopropionate), dipentaerythritol hexakis(2-mercaptopropionate), ethylene glycol bis(3-mercaptoisobutyrate), propylene glycol bis(3-mercaptoisobutyrate), diethylene glycol bis(3-mercaptoisobutyrate), butanediol bis(3-mercaptoisobutyrate), octanediol bis(3-mercaptoisobutyrate), trimethylolpropane tris(3-mercaptoisobutyrate), pentaerythritol tetrakis(3-mercaptoisobutyrate), dipentaerythritol hexakis(3-mercaptoisobutyrate), ethylene glycol bis(2-mercaptoisobutyrate), propylene glycol bis(2-mercaptoisobutyrate), diethylene glycol bis(2-mercaptoisobutyrate), butanediol bis(2-mercaptoisobutyrate), octanediol bis(2-mercaptoisobutyrate), trimethylolpropane tris(2-mercaptoisobutyrate), pentaerythritol tetrakis(2-mercaptoisobutyrate), dipentaerythritol hexakis(2-mercaptoisobutyrate), ethylene glycol bis(4-mercaptovalerate), propylene glycol bis (4-mercaptoisovalerate), diethylene glycol bis(4-mercaptovalerate), butanediol bis(4-mercaptovalerate), octanediol bis (4-mercaptovalerate), trimethylolpropane tris(4-mercaptovalerate), pentaerythritol tetrakis(4-mercaptovalerate), dipentaerythritol hexakis(4-mercaptovalerate), ethylene glycol bis(3-mercaptovalerate), propylene glycol bis(3-mercaptovalerate), diethylene glycol bis(3-mercaptovalerate), butanediol bis(3-mercaptovalerate), octanediol bis(3-mercaptovalerate), trimethylolpropane tris(3-mercaptovalerate), pentaerythritol tetrakis(3-mercaptovalerate), dipentaerythritol hexakis (3-mercaptovalerate), hydrogenated bisphenol A bis(3-mercaptobutyrate), bisphenol A dihydroxyethyl ether-3-mercaptobutyrate, 4,4'-(9-fluorenylidene)bis(2-phenoxyethyl(3-mercaptobutyrate)), ethylene glycol bis(3-mercapto-3-phenylpropionate), propylene glycol bis(3-mercapto-3-phenylpropionate), diethylene glycol bis(3-mercapto-3-phenylpropionate), butanediol bis(3-mercapto-3-phenylpropionate), octanediol bis(3-mercapto-3-phenylpropionate), trimethylolpropane tris(3-mercapto-3-phenylpropionate), tris-2-(3-mercapto-3-phenylpropionato)ethyl isocyanurate, pentaerythritol tetrakis(3-mercapto-3-phenylpropionate) and dipentaerythritol hexakis(3-mercapto-3-phenylpropionate).

Preferred examples of solvents for use in the synthesis of the (meth)acrylic (co)polymer include ester-based solvents, such as ethyl acetate, butyl acetate, propylene glycol monomethyl ether, propylene glycol monomethyl ether acetate and ethylene glycol monobutyl ether acetate, and aromatic hydrocarbon-based solvents, such as toluene and xylene.

The reaction temperature in the synthesis of the (meth) acrylic (co)polymer is in the range of usually 60˚C to 130˚C, preferably 70˚C to 125˚C, more preferably 75˚C to 120˚C. If the reaction temperature is lower than 60˚C, there is a fear that the polymerization initiator does not exert its function sufficiently. If the reaction temperature is higher than 130˚C, there is a fear that the isocyanate group is destroyed.

As a polymerization initiator for use in the synthesis of the (meth) acrylic (co)polymer, an azo-based initiator, a peroxide-based initiator or the like is employable, but from the viewpoint of stability of the isocyanate group, an azo-based initiator is preferably used. Examples of the azo-based initiators include azobisisobutyronitrile, 2,2-azobis-(2,4-dimethylvaleronitrile) and dimethyl-2,2-azobis-(2-methylpropionate).

Examples of the alcohol compounds having a (meth)acryloyloxy group (also referred to as "(meth)acryloyloxy group-containing alcohol" hereinafter), which are used for introducing an unsaturated group into the (meth) acrylic (co) polymer, include 2-hydroxyethyl (meth)acrylate, 2-hydroxypropyl (meth)acrylate, 3-hydroxypropyl (meth)acrylate, 2-hydroxybutyl (meth)acrylate, 2-hydroxy-3-phenoxypropyl acrylate, 4-hydroxybutyl (meth) acrylate, polyethylene glycol mono(meth)acrylate, polypropylene glycol mono (meth) acrylate, caprolactone-modified diol mono (meth)acrylate, 2-hydroxy-3-acryloyloxypropyl methacrylate and pentaerythritol triacrylate, but the alcohol compounds are not limited to these compounds. For the purpose of controlling the content of the unsaturated group, an alcohol having no unsaturated group, such as butanol, may be used in combination.

Examples of catalysts employable for the reaction of isocyanate groups in the isocyanate compound of the formula (8) and the isocyanate compound (a1) with active hydrogen groups in the alcohol compound having a (meth) acryloyloxy group include dibutyltin dilaurate, copper naphthenate, cobalt naphthenate, lithium naphthenate, triethylamine and 1,4-diazabicyclo[2.2.2]octane. These urethanation catalysts may be used singly, or may be used in combination of two or more kinds.

The amount of the catalyst added is in the range of preferably 0.01 to 5 parts by mass, more preferably 0.1 to 1 part by mass, based on 100 parts by mass of the total of the isocyanate compound of the formula (8) and the isocyanate compound (a1). If the amount of the urethanation catalyst added is less than 0.01 part by mass, reactivity is sometimes markedly lowered. On the other hand, if the amount of the urethanation catalyst added exceeds 5 parts by mass, side reaction may occur during the reaction.

As a solvent for use in the reaction of the isocyanate groups with the active hydrogen groups, the same solvent as used in the copolymerization reaction is preferably used from the economical viewpoint.
The reaction temperature suitable for the reaction of the isocyanate groups with the active hydrogen groups is in the range of 20˚C to 100˚C, preferably 25˚C to 90˚C, more preferably 30˚C to 80˚C. If the reaction temperature is lower than 20˚C, there is a fear that unreacted isocyanate groups remain. If the reaction temperature exceeds 100˚C, there is a fear of gelation or undesired coloring.

The double bond equivalent of the reactive (meth)acrylate polymer (A) of the present invention is preferably not more than 1000 g/mol but not less than 200 g/mol, more preferably not more than 750 g/mol but not less than 250 g/mol, most preferably not more than 550 g/mol but not less than 250 g/mol. If the double bond equivalent is more than 1000 g/mol, film strength is sometimes lowered. If the double bond equivalent is less than 200 g/mol, curing shrinkage is sometimes increased. The double bond equivalent is defined by the following formula. The numerator in this formula corresponds to the mass of the reactive (meth) acrylate polymer (A).
Double bond equivalent = [mass (g) of all monomers + mass (g) of polymerization initiator + mass (g) of all alcohols] / [amount (mol) of (meth)acyloyloxy group-containing alcohol used in reaction with (meth)acrylic (co)polymer × number of unsaturated groups in (meth)acryloyloxy group-containing alcohol]
The urethane equivalent of the reactive (meth) acrylate polymer (A) of the present invention is preferably not more than 1000 g/mol but not less than 200 g/mol, more preferably not more than 750 g/mol but not less than 250 g/mol, most preferably not more than 550 g/mol but not less than 250 g/mol. If the urethane equivalent is more than 1000 g/mol, film strength is sometimes lowered. If the urethane equivalent is less than 200 g/mol, viscosity is liable to increase or the polymer is liable to be crystallized, and the handling properties are sometimes lowered. The urethane equivalent is defined by the following formula.
Urethane equivalent = [mass (g) of all monomers + mass (g) of polymerization initiator + mass (g) of all alcohols]/[amount (mol) of (meth)acyloyloxy group-containing alcohol used in reaction with (meth)acrylic (co)polymer]
In the case where a urethane (meth) acrylate compound is further used as a copolymerization component, the amount (mol) of the urethane (meth)acrylate compound is added to the denominator of the above formula of the urethane equivalent.

Polymerization initiator (B)

The curable composition of the present invention contains a polymerization initiator (B).
In the present invention, a photopolymerization initiator or a thermal polymerization initiator can be used as the polymerization initiator (B). As the polymerization initiator (B), a photopolymerization initiator is preferable from the viewpoint that the polymerization initiator is employable also for a base material having low heat resistance.
In the case where the photopolymerization initiator is used, the curable composition is irradiated with active energy rays, such as ultraviolet rays or visible rays, to cause polymerization reaction of the reactive (meth)acrylate polymer (A) with the later-described reactive monomer (C), and a urethane oligomer (D) and silica fine particles (E) which are used when needed, whereby a cured product can be obtained.
Examples of such photopolymerization initiators include 1-hydroxycyclohexyl phenyl ketone, 2,2'-dimethoxy-2-phenylacetophenone, xanthone, fluorene, fluorenone, benzaldehyde, anthraquinone, triphenylamine, carbazole, 3-methylacetophenone, 4-chlorobenzophenone, 4,4'-dimethoxybenzophenone, 4,4'-diaminobenzophenone, Michler's ketone, benzoyl propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, phenylglyoxylic acid methyl ester, thioxanthone, diethyl thioxanthone, 2-isopropyl thioxanthone, 2-chlorothioxanthone, 2-methyl-1-[4-(methylthio)phenyl]-2-morpholinopropan-1-one, 2,4,6-trimethylbenzoyl diphenylphosphine oxide, 2-benzyl-2-dimethylamino-1-(4-morpholinophenyl)butan-1-one and 1-[4-(2-hydroxyethoxy)-phenyl]-2-hydroxy-2-methylpropan-1-one.
Of these, 1-hydroxycyclohexyl phenyl ketone, 2-hydroxy-2-methyl-1-propan-1-one and methyl benzoyl formate are preferable from the viewpoint of curing rate.
These photopolymerization initiators may be used singly, or may be used in combination of two or more kinds. In the case where the thermal polymerization initiator is used, the curable composition is heated to cause polymerization reaction of the reactive (meth)acrylate polymer (A) with the later-described reactive monomer (C), and a urethane oligomer (D) and silica fine particles (E) which are used when needed, whereby a cured product can be obtained.
Examples of the thermal polymerization initiators include azo compounds and organic peroxides.
Examples of the azo compounds include 2,2'-azobis(isobutyronitrile), 2,2'-azobis(2,4-dimethylvaleronitrile), dimethyl-2,2'-azobis(2-methylpropionate), 2,2'-azobis(isobutyric acid)dimethyl, 4,4'-azobis(4-cyanovaleric acid), 2,2'-azobis(2-amidinopropane) dihydrochloride and 2,2'-azobis{2-methyl-N-[2-(1-hydroxybutyl)]-propionamide}.
Examples of the organic peroxides include benzoyl peroxide and lauroyl peroxide.
Of these, 2,2'-azobis(isobutyronitrile) and dimethyl-2,2'-azobis(2-methylpropionate) are preferable from the viewpoint of curing rate. These thermal polymerization initiators may be used singly, or may be used in combination of two or more kinds.

Reactive monomer (C)

The reactive monomer (C) is a compound which is polymerized or crosslinked by radicals generated from the photopolymerization initiator during irradiation with active rays, or a compound which is polymerized or crosslinked by

heating. By copolymerizing the reactive (meth)acrylate polymer (A) and the reactive monomer (C), a crosslinked product is formed, and the curable composition of the present invention is cured. The reactive monomer (C) is also referred to as a "reactive diluent", and has functions of controlling viscosity of the composition, controlling curability of the composition, etc. The reactive monomer (C) is, for example, a compound having one or more carbon-carbon double bonds, and specifically, (meth) acrylic acid esters or urethane (meth)acrylates are preferably used.

Examples of the (meth) acrylic acid esters include (meth)acrylates having a hydroxyl group, such as 2-hydroxyethyl (meth)acrylate, hydroxypropyl (meth)acrylate, hydroxybutyl (meth)acrylate, glycerol (meth)acrylate and polyethylene glycol (meth)acrylate; diacrylates, such as ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, 1, 4-butanediol di (meth) acrylate, neopentyl glycol di (meth) acrylate and 1,6-hexanediol di(meth)acrylate; polyacrylates, such as trimethylolpropane tri(meth)acrylate, pentaerythritol tri(meth)acrylate and dipentaerythritol hexa(meth)acrylate; glycidyl (meth)acrylate, tricyclodecane di(meth)acrylate, tris (2-(meth)acryloyloxyethyl) isocyanurate, polyester acrylate, and epoxy acrylate.

Of these, (meth) acrylates having a hydroxyl group and glycidyl (meth) acrylate are preferable. From the viewpoints of high curability and high heat resistance, a compound having 3 or more ethylenically unsaturated groups is preferable.

As the urethane (meth) acrylate used as the reactive monomer (C), an urethane (meth)acrylate obtained by, for example, a reaction of (C-a) an isocyanate compound with (C-b) an unsataurated group-containing alcohol compound or a reaction of (C-c) an alcohol compound with (C-d) an unsaturated group-containing isocyanate compound is employable.

Examples of the isocyanate compounds (C-a) include hexamethylene diisocyanate, isophorone diisocyanate, 2,2-bis(4,4'-isocyanatocyclohexyl)propane, bis(4,4'-isocyanatocyclohexyl)methane, totylene diisocyanate and tris (2-isocyanatoethyl) isocyanurate, but the isocyanate compounds (C-a) are not limited to these compounds.

Examples of the unsaturated group-containing alcohol compounds (C-b) include 2-hydroxyethyl (meth)acrylate, 2-hydroxypropyl (meth)acrylate, 3-hydroxypropyl (meth)acrylate, 2-hydroxybutyl (meth) acrylate, 2-hydroxy-3-phenoxypropyl acrylate, 4-hydroxybutyl (meth)acrylate, polyethylene glycol mono(meth)acrylate, polypropylene glycol mono (meth)acrylate, caprolactone-modified diol mono(meth)acrylate, 2-hydroxy-3-acryloyloxypropyl methacrylate, pentaerythritol triacrylate and dipenterythritol hexaacrylate, but the unsaturated group-containing alcohol compounds (C-b) are not limited to these compounds.

Examples of the alcohol compounds (C-c) include alkyl glycols, such as ethylene glycol and 1,4-butanediol, tricyclodecane dimethanol, norbornene dimethanol, diol having bisphenol A skeleton, diol having fluorene skeleton, trimethylolpropane, tris(2-hydroxyethyl) isocyanurate, pentaerythritol, ditrimethylolpropane and dipentaerythritol, but the alcohol compounds (C-c) are not limited to these compounds.

Examples of the unsaturated group-containing isocyanate compounds (C-d) include the compounds of the formula (6), 2-(meth)acryloyloxyethyl isocyanate, 3-(meth)acryloyloxypropyl isocyanate, 4-(meth)acryloylbutyl isocyanate, 5-(meth)acryloyloxypentyl isocyanate, 6-(meth)acryloyloxyhexyl isocyanate, 3-(meth)acryloyloxyphenyl isocyanate and 4-(meth)acryloyloxyphenyl isocyanate, but the unsaturated group-containing isocyanate compounds (C-d) are not limited to these compounds.

As the urethane (meth)acrylates used herein, compounds of the following formulas (10-a) to (10-c) are particularly preferable from the viewpoints of viscosity of the composition and properties required for the cured product.

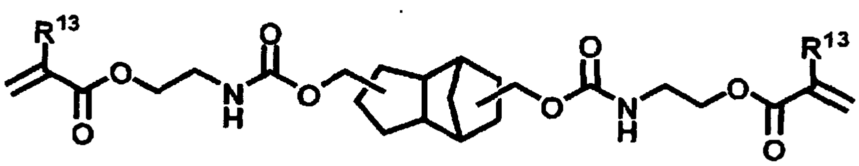

(10−a)

In the formula (10-a), $R^{13}$ is a hydrogen atom or a methyl group.

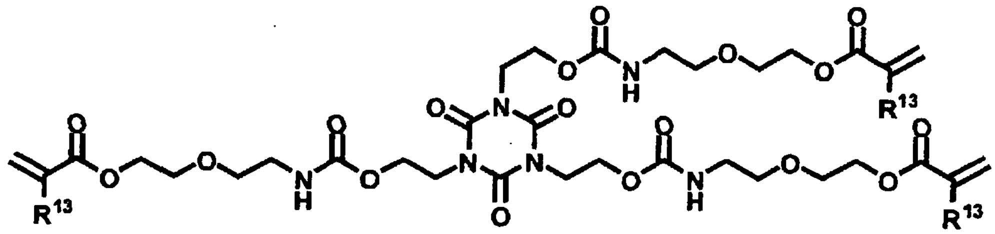

(10−b)

In the formula (10-b), $R^{13}$ is a hydrogen atom or a methyl group.

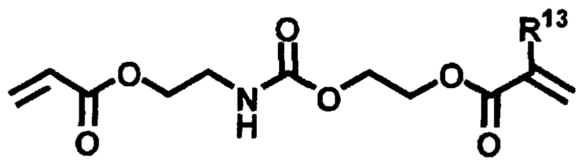

(10−c)

In the formula (10-c), $R^{13}$ is a hydrogen atom or a methyl group.

<u>Urethane oligomer (D)</u>

The curable composition of the present invention may contain a urethane oilgomer (D). By the use of the urethane oligomer (D), surface hardness of the cured product can be enhanced, and flexibility can be imparted to the cured product.

The urethane oligomer (D) is an oligomer having one or more polymerizable unsaturated bonds and two or more urethane bonds, and specifically, there can be mentioned trade name: Beam Set (registered trademark) 102, 502H, 505A-6, 510, 550B, 551B, 575, 575CB, EM-90, EM92 (available from Arakawa Chemical Industries, Ltd.); trade name: Photomer (registered trademark) 6008, 6210 (available from San Nopco Limited); trade name: NK Oligo U-2PPA, U-4HA, U-6HA, U-15HA, UA-32P, U-324A, U-4H, U-6H, UA-160TM (reaction product of 2-hydroxyethyl acrylate, isophorone diisocyanate and polytetramethylene glycol), UA-122P, UA-2235PE, UA-340P, UA-5201, UA-512 (available from Shin-Nakamura Chemical Co., Ltd.); trade name: Aronix (registered trademark) M-1100, M-1200, M1210, M1310, M1600, M-1960, M-5700, Aron Oxetane (registered trademark) OXT-101 (available fromToagosei Co., Ltd.); trade name: AH-600, AT606, UA-306H, UF-8001 (available from Kyoeisha Chemical Co., Ltd); trade name: Kayarad (registered trademark) UX-2201, UX-2301, UX-3204, UX-3301, UX-4101, UX-6101, UX-7101 (available from Nippon Kayaku Co., Ltd.); trade name:Shiko (registered trademark) UV-1700B, UV-3000B, UV-6100B, UV-6300B, UV-7000, UV-7600B, UV-7640B, UV-7605B, UV-2010B, UV-6630B, UV-7510B, UV-7461TE, UV-3310B, UV-6640B (available from Nippon Synthetic Chemical Industry Co. , Ltd.); trade name: Art Resin UN-1255, UN-5200, UN-7700, UN-333, UN-905, HDP-4T, HMP-2, UN-901T, UN-3320HA, UN-3320HB, UN-3320HC, UN-3320HS, H-61, HDP-M20, UN-5500, UN-5507 (available from Negami Chemical Industrial Co., Ltd.); trade name: Ebecryl (registered trademark) 6700, 204, 205, 220, 254, 1259, 1290K, 1748, 2002, 2220, 4833, 4842, 4866, 5129, 6602, 8301 (available from Dicel-UCB Co., Ltd.); etc.

The urethane oligomer (D) which is used for the purpose of imparting hardness to the cured product is preferably a urethane oligomer having 3 or more (meth)acrylate groups, more preferably a urethane oligomer having 6 or more (meth) acrylate groups, and specifically, there can be mentioned trade name: U-6HA, U-15HA, UA-32P, UV-1700B, UB-7600B, UV-7640B, UV-7605B and the like mentioned above.

The urethane oligomer (D) which is used for the purpose of imparting flexibility to the cured product is preferably a urethane oligomer having a weight-average molecular weight of not less than 1000 and having two (meth)acrylate groups. Specifically, therecanbementionedtradename: A-160TM, UA-122P, UA-5201, UV-6630B, UV-7000B, UV-6640B, UN-7700 and the like mentioned above.

The weight-average molecular weight of the urethane oligomer (D) in terms of polystyrene, as measured by GPC, is in the range of preferably 500 to 15000, more preferably 1000 to 3000, though it is not specifically restricted.

The above urethane oligomers (D) maybe used singly, or may be used as a mixture of two or more kinds.

Silica fine particles (E)

The curable composition of the present invention may contain silica fine particles (E). When the curable composition of the present invention contains the silica fine particles (E), curing shrinkage of the cured product is inhibited, and not only warpage of the cured product can be prevented but also surface hardness, scratch resistance and heat resistance can be imparted to the cured product.

The silica fine particles (E) for use in the present invention are not specifically restricted as long as they are silica fine particles having a number-average particle diameter of 1 to 100 nm. From the viewpoint of dispersibility, the silica fine particles (E) are preferably used in the form of colloidal silica wherein the silica fine particles (E) are dispersed in an organic solvent. As the organic solvent used for the colloidal silica, a solvent capable of dissolving organic substance components used in the curable composition is preferably used, and examples of such solvents include alcohols, kekones, esters and glycol ethers. From the viewpoint of ease of solvent removal, it is preferable to use alcohol-based organic solvents, such as methanol, ethanol, isopropyl alcohol, butyl alcohol andn-propylalcohol, andketone-basedorganicsolvents, suchasmethyl ethyl ketone and methyl isobutyl ketone. It is more preferable to use colloidal silica wherein the silica fine particles (E) are dispersed in isopropyl alcohol. Especially when colloidal silica wherein the silica fine particles (E) are dispersed in isopropyl alcohol is used, a low-viscosity curable composition whose viscosity after removal of solvent is lower than that in the case of using other solvent systems can be stably prepared.

The number-average particle diameter of the silica fine particles (E) is in the range of preferably 1 to 100 nm, and from the viewpoint of a balance between transparency and fluidity, the number-average particle diameter is more preferably 1 to 50 nm, still more preferably 5 to 50 nm, most preferably 5 to 40 nm. The number-average particle diameter is a numerical value determined as a number-average particle diameter by observing the silica fine particles (E) with a high resolution transmission electron microscope (H-9000 model manufactured by Hitachi, Ltd.). If the number-average particle diameter of the silica fine particles (E) is less than 1 nm, viscosity of the resulting curable composition is extremely increased, so that not only the amount of the silica fine particles (E) filled is restricted but also dispersibility thereof is deteriorated, and as a result, a cured product having sufficient transparency and heat resistance cannot be obtained. Silica fine particles (E) having a number-average particle diameter of more than 100 nm are undesirable because transparency of the cured product is liable to be markedly deteriorated. In order to increase the amount of the silica fine particles (E) filled, a mixture of silica fine particles having different average particle diameters may be used. Moreover, a porous silica sol or a composite metal oxide of aluminum, magnesium, zinc or the like and silicon may be used.

The silica fine particles (E) for use in the present invention may have been surface-treated with at least one of a silane compound (F) represented by the formula (6) and a silane compound (G) represented by the formula (7).

In the present invention, the silane compound (F) is used in order to decrease viscosity of the curable composition, in order to enhance dispersion stability of the silica fine particles (E) by the reaction of the silane compound (F) with the aforesaid reactive (meth)acrylate having an ethylenically unsaturated group and in order to reduce curing shrinkage during curing of the curable composition thereby to impart toughness to the cured film. That is to say, unless the silane compound (F) is used, viscosity of the curable composition is increased, and besides, curing shrinkage in the curing process is increased. Consequently, the cured film becomes brittle, and a crack tends to occur.

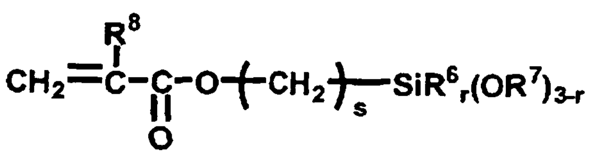

(6)

In the formula (6), $R^8$ is a hydrogen atom or a methyl group, $R^6$ is an alkyl group of 1 to 3 carbon atoms or a phenyl group, $R^7$ is a hydrogen atom or a hydrocarbon residue of 1 to 10 carbon atoms, s is an integer of 1 to 6, and r is an integer of 0 to 2.

Examples of the silane compounds (F) include γ-acryloxypropyldimethylmethoxysilane, γ-acryloxypropylmethyldimethoxysilane, γ-acryloxypropyldiethylmethoxysilane, γ-acryloxypropylethyldimethoxysilane, γ-acryloxypropyltrimethoxysilane, γ-acryloxypropyldimethylethoxysilane, γ-acryloxypropylmethyldiethoxysilane, γ-acryloxypropyldiethylethoxysilane, γ-acryloxypropylethyldiethoxysilane, γ-acryloxypropyltriethoxysilane, γ-methacryloxypropyldimethylmethoxysilane, γ-methacryloxypropylmethyldimethoxysilane, γ-methacryloxypropyldiethylmethoxysilane, γ-methacryloxypropylethyldimethoxysilane, γ-methacryloxypropyltrimethoxysilane, γ-methacryloxypropyldimethylethoxysilane, γ-methacryloxypropylmethyldiethoxysilane, γ-methacryloxypropyldiethylethoxysilane, γ- methacryloxypropylethyldiethoxysilane and γ-methacryloxypropyltriethoxysilane. From the viewpoints of prevention of aggregation of the silica fine particles

(E), decrease of viscosity of the curable composition and storage stability of the curable composition, γ-acryloxypropyldimethylmethoxysilane, γ -acryloxypropylmethyldimethoxysilane, γ -methacryloxypropyldimethylmethoxysilane, γ -methacryloxypropylmethyldimethoxysilane, γ -acryloxypropyltrimethoxysilane and γ -methacryloxypropyltrimethoxysilane are preferable, and γ -acryloxypropyltrimethoxysilane is more preferable. These compounds may be used in combination of two or more kinds.

When the resin in the curable composition contains a large amount of acrylate, it is preferable to use a silane compound (F) represented by the formula (6) and containing an acrylic group. When the resin in the curable composition contains a large amount of methacrylate, it is preferable to use a silane compound (F) represented by the formula (6) and containing a methacrylic group.

The silane compound (G) for use in the present invention is a silane compound having an aromatic ring structure and represented by the following formula (7).

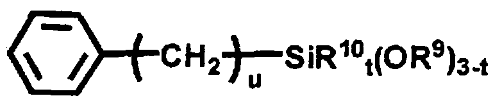

(7)

In the formula (7), $R^{10}$ is an alkyl group of 1 to 3 carbon atoms or a phenyl group, $R^9$ is a hydrogen atom or a hydrocarbon residue of 1 to 10 carbon atoms, u is an integer of 0 to 6, and t is an integer of 0 to 2.

When the silane compound (G) reacts with the surfaces of the silica fine particles (E), hydrophobicity of the silica surface is increased, and therefore, dispersibility of the silica fine particles (E) in the organic solvent used for colloidal silica is enhanced. Moreover, compatibility of the silica fine particles (E) with the reactive acrylate polymer (A), the reactive monomer (C) and the urethane oligomer (D) becomes good when the silica fine particles (E) are added to the curable composition, and hence, viscosity of the curable composition is decreased to thereby enhance storage stability, and at the same time, water absorption ratio is lowered.

Examples of the silane compounds (G) for use in the present invention include phenyldimethylmethoxysilane, phenylmethyldimethoxysilane, phenyldiethylmethoxysilane, phenylethyldimethoxysilane, phenyltrimethoxysilane, phenyldimethylethoxysilane, phenylmethyldiethoxysilane, phenyldiethylethoxysilane, phenylethyldiethoxysilane, phenyltriethoxysilane, benzyldimethylmethoxysilane, benzylmethyldimethoxysilane, benzyldiethylmethoxysilane, benzylethyldimethoxysilane, benzyltrimethoxysilane, benzyldimethylethoxysilane, benzylmethyldiethoxysilane, benzyldiethylethoxysilane, benzylethyldiethoxysilane and benzyltriethoxysilane. From the viewpoints of decrease of viscosity of the curable composition and storage stability of the curable composition, phenyldimethylmethoxysilane, phenylmethyldimethoxysilane, phenyldiethylmethoxysilane, phenylethyldimethoxysilane and phenyltrimethoxysilane are preferable, and phenyltrimethoxysilane is more preferable. These compounds may be used in combination of two or more kinds.

The amount of the silane compound (F) represented by the formula (6) added in the surface treatment of the silica fine particles (E) is in the range of 5 to 25 parts by mass, preferably 10 to 20 parts by mass, more preferably 12 to 18 parts by mass, based on 100 parts by mass of the silica fine particles (E). If the amount of the silane compound (F) added is less than 5 parts by mass, viscosity of the curable composition is increased, and dispersibility of the silica fine particles (E) is deteriorated to thereby cause gelation, so that such an amount is undesirable.

The amount of the silane compound (G) represented by the formula (7) added in the surface treatment of the silica fine particles (E) is in the range of 5 to 25 parts by mass, preferably 10 to 20 parts by mass, more preferably 12 to 18 parts by mass, based on 100 parts by mass of the silica fine particles (E). If the amount of the silane compound (G) added is less than 5 parts by mass, viscosity of the curable composition is increased, and there is a fear of occurrence of gelation or lowering of heat resistance. If the total amount of the silane compound (F) and the silane compound (G) exceeds 50 parts by mass based on 100 parts by mass of the silica fine particles (E), reaction of the silica particles with one another takes place in the heat treatment of the silica fine particles (E) and thereby aggregation and gelation of the silica fine particles (E) are liable to occur, because the amount of the treating agent is too large.

When the silica fine particles (E) of the present invention are surface-treated with at least one of the silane compound (F) represented by the formula (6) and the silane compound (G) represented by the formula (7), hydrolysis reaction of the silane compound is carried out. The lower limit of the amount of water required to carry out hydrolysis reaction of the silane compound is not less than once the number of moles of alkoxy groups bonded to the silane compound, and the upper limit thereof is not more than 10 times the number of moles of the alkoxy groups. If the amount of water is excessively small, hydrolysis rate becomes extremely slow, resulting in lack of economy, or there is a fear that the surface treatment does not proceed sufficiently. In contrast therewith, if the amount of water is excessively large,

silica is liable to form a gel.

When the hydrolysis reaction is carried out, a catalyst for hydrolysis reaction is usually used. Examples of such catalysts include inorganic acids, such as hydrochloric acid, acetic acid, sulfuric acid and phosphoric acid; organic acids, such as formic acid, propionic acid, oxalic acid, paratoluenesulfonic acid, benzoic acid, phthalic acid and maleic acid; alkali catalysts, such as potassiumhydroxide, sodiumhydroxide, calcium hydroxide and ammonia; organic metals; metallic alkoxides; organotin compounds, such as dibutyltin dilaurate, dibutyltin dioctylate and dibutyltin diacetate; metallic chelate compounds, such as aluminum tris(acetylacetonate), titanium tetrakis(acetylacetonate), titanium bis(butoxy)bis(acetylacetonate), titanium bis(isopropoxy)bis(acetylacetonate), zirconium bis(butoxy)bis(acetylacetonate) and zirconium bis(isopropoxy)bis(acetylacetonate); and boron compounds, such as boron butoxide and boric acid. Of these, hydrochloric acid, acetic acid, maleic acid and boron compounds are preferable from the viewpoints of solubility in water and satisfactory hydrolysis rate. Two or more kinds of these catalysts may be used in combination.

When the hydrolysis reaction of the silane compound is carried out in the embodiment of the present invention, it is preferable to use a water-soluble catalyst though a water-insoluble catalyst may be used. In the case where a water-soluble catalyst for hydrolysis reaction is used, it is preferable that the water-soluble catalyst is dissolved in an appropriate amount of water and added to the reaction system, because the catalyst can be homogeneously dispersed.

Although the amount of the catalyst for use in the hydrolysis reaction is not specifically restricted, it is usually not less than 0.1 part by mass, preferably not less than 0.5 part by mass, and usually not more than 10 parts by mass, preferably not more than 5 parts by mass, based on 100 parts by mass of the silica fine particles (E).

Although the reaction temperature to carry out the hydrolysis reaction is not specifically restricted, it is usually not lower than 10˚C but not higher than 80˚C, preferably not lower than 20˚C but not higher than 50˚C. If the reaction temperature is excessively low, hydrolysis rate becomes extremely slow, resulting in lack of economy, or there is a fear that the surface treatment does not proceed sufficiently. If the reaction temperature is excessively high, gelation reaction is liable to take place. Although the reaction time to carry out the hydrolysis reaction is not specifically restricted, it is usually not less than 10 minutes, preferably not less than 30 minutes. However, the reaction time to carry out the hydrolysis reaction is usually not more than 48 hours, preferably not more than 24 hours.

Other components

In the curable composition of the present invention, a polymerization inhibitor may be contained in an amount of not more than 0.1 part by mass based on 100 parts by mass of the total of the components (A) to (E). The polymerization inhibitor is used in order to prevent the components contained in the curable composition from undergoing polymerization reaction during storage. Examples of the polymerization inhibitors include hydroquinone, hydroquinone monomethyl ether, benzoquinone, p-t-butyl catechol and 2,6-di-t-butyl-4-methylphenol.

To the curable composition of the present invention, a thiol compound, a leveling agent, a pigment, an inorganic filler, a solvent and other modifiers may be added.

The thiol compound functions as a chain transfer agent in the curing by irradiation with energy rays and can improve curability of the curable composition. The reason why the curability can be improved is that oxygen inhibition of radical polymerization can be reduced by the addition of the thiol compound. Moreover, the thiol compound can control properties of the resulting cured product, e.g., mechanical properties, such as reactivity, hardness, elasticity and adhesion, and optical properties, such as transparency.

The leveling agent is added to the composition for the purpose of smoothing the coating film. Examples of the leveling agents include a polyether-modified dimethylpolysiloxane copolymerization product, a polyester-modified dimethylpolysiloxane copolymerization product, a polyether-modified methylalkylpolysiloxane copolymerization product, an aralkyl-modified methylalkylpolysiloxane copolymerization product and a polyether-modified methylalkylpolysiloxane copolymerization product.

Examples of the pigments which are used for the purpose of coloring include zinc white, red iron oxide, azo pigment and titanium oxide.

Examples of the inorganic fillers which are used for imparting electrical conductivity, thermal conductivity, catalytic action, etc. include conductive metal fine particles and conductive metal oxide fine particles. Examples of the metals employable herein include gold, silver, copper, platinum, aluminum, antimony, selenium, titanium, tungsten, tin, zinc, indium and zirconia. Examples of the metal oxides include alumina, antimony oxide, selenium oxide, titanium oxide, tungsten oxide, tin oxide, antimony-doped tin oxide (ATO (tin oxide doped with antimony), phosphorus-doped tin oxide, zinc oxide, zinc antimonite and tin-doped indium oxide.

As other modifiers, there can be mentioned natural and synthetic high-molecular weight substances, e.g., polyolefin-basedresin, chlorinatedmodifiedpolyolefin-basedresin, unsaturated polyester resin, vinyl ester resin, vinyl urethane resin, vinyl ester urethane resin, polyisocyanate, polyepoxide, epoxy-terminated polyoxazolidone, acrylic resins, alkyd resins, urea resins, melamine resins, polydiene-based elastomer, saturated polyesters, saturated polyethers, nitrocellulose, cellulose derivatives such as cellulose acetate butyrate, and oils and fats, such as linseed oil, tung oil,

soybean oil, castor oil and epoxidized oil.

The curable composition of the present invention can be prepared by mixing the reactive (meth)acrylate polymer (A), the polymerization initiator (B), the reactive monomer (C), and if necessary, the urethane oligomer (D), the silica fine particles (E) and other components with one another by the use of a mixing machine, such as a mixer, a ball mill or a three-roll machine, at room temperature or under the heating conditions, or by adding a reactive monomer or a solvent as a diluent and dissolving the components therein.

An example of the reactive monomer used as a diluent is the aforesaid reactive monomer (C).

Examples of the solvents include:

esters, such as ethyl acetate, butyl acetate and isopropyl acetate; ketones, such as acetone, methyl ethyl ketone, methyl isobutyl ketone and cyclohexanone; cyclic ethers, such as tetrahydrofuran and dioxane;
amides, such as N,N-dimethylformamide;
aromatic hydrocarbons, such as toluene; halogenated hydrocarbons, such as methylene chloride;
ethylene glycols, such as ethylene glycol, ethylene glycol methyl ether, ethylene glycol mono-n-propyl ether, ethylene glycol monomethyl ether acetate, diethylene glycol, diethylene glycol monomethyl ether, diethylene glycol monoethyl ether and diethylene glycol monoethyl ether acetate; and
propylene glycols, such as propylene glycol, propylene glycol methyl ether, propylene glycol ethyl ether, propylene glycol butyl ether, propylene glycol propyl ether, propylene glycol monomethyl ether acetate, dipropylene glycol, dipropylene glycol monomethyl ether, dipropylene glycol monoethyl ether and dipropylene glycol monomethyl ether acetate.
Of these, preferable are ethyl acetate, methyl ethyl ketone, cyclohexanone, toluene, dichloromethane, diethylene glycol monomethyl ether and propylene glycol monomethyl ether acetate.

The above solvents may be used singly or in combination of two or more kinds.
The amount of the solvent used is in the range of usually 50 to 200 parts by mass, preferably 50 to 100 parts by mass, based on 100 parts by mass of the curable composition.

A preferred process for preparing the curable composition by blending the silica fine particles (E) as colloidal silica is, for example, a process for preparing the curable composition by successively carrying out the following steps: a step (step 1) of surface-treating the silica fine particles (E) dispersed in an organic solvent, a step (step 2) of adding other curable components ("curable components" mean components undergoing polymerization during curing of the composition, such as the reactive (meth) acrylate polymer (A), the reactive monomer (C), the urethane oligomer (D) and the silica fine particles (E)) to the surface-treated silica fine particles (E) and homogeneously mixing them, a step (step 3) of removing an organic solvent and water from the homogeneously mixed solution of colloidal silica and other curable components obtained in the step 2, that is, a solvent removal step, and a step (step 4) of adding the polymerization initiator (B) to the composition having been subjected to solvent removal in the step 3 and homogeneously mixing them to give a curable composition.

The method for mixing the colloidal silica, in which the silica fine particles (E) having been surface-treated in the step 1 are dispersed in an organic solvent, with other curable components in the step 2 is not specifically restricted, but there can be mentioned, for example, a method comprising mixing them by a mixing machine, such as a mixer, a ball mill or a three-roll machine, at room temperature or under the heating conditions, and a method comprising adding other curable components to the colloidal silica with continuously stirring them in the same reactor as used in the step 1 and mixing them.

In the step 3, removal of an organic solvent and water from the homogeneously mixed solution of colloidal silica and other curable components is carried out by, for example, heating the homogeneously mixed solution in vacuo. The temperature in the heating is preferably maintained at 20 to 100°C, and from the viewpoint of a balance between solvent removal speed and prevention of aggregation and gelation, the temperature is in the range of more preferably 30 to 70°C, most preferably 30 to 50°C. If the temperature is too high, fluidity of the curable composition is sometimes extremely lowered, or the composition sometimes becomes a gel, so that such a temperature is undesirable. The degree of vacuum is in the range of 10 to 4000 kPa, and from the viewpoint of a balance between solvent removal speed and prevention of aggregation and gelation, the degree of vacuum is in the range of more preferably 10 to 1000 kPa, most preferably 10 to 500 kPa. If the value of the degree of vacuum is too large, solvent removal speed becomes extremely slow, resulting in lack of economy, so that such a value is undesirable.

It is preferable that the composition after solvent removal does not substantially contain an organic solvent and water. The term "substantially" referred to herein means that it is unnecessary to carry out a step of solvent removal again when a molded cured product is actually obtained from the curable composition of the present invention. The total

amount of a residual organic solvent and residual water in the curable composition is preferably not more than 1% by mass, more preferably not more than 0.5% by mass, still more preferably not more than 0.1% by mass.

In the step 3, prior to the solvent removal, a polymerization inhibitor may be added in an amount of not more than 0.1 part by mass based on 100 parts by mass of the composition given after the solvent removal. The polymerization inhibitor is used in order to prevent the components contained in the composition from undergoing polymerization reaction during the solvent removal or storage of the composition after the solvent removal. Examples of the polymerization inhibitors include hydroquinone, hydroquinone monomethyl ether, benzoquinone, p-t-butyl catechol and 2,6-di-t-butyl-4-methylphenol. Two or more kinds of these polymerization inhibitors may be used in combination.

Although the content of the reactive (meth) acrylate polymer (A) in the curable composition of the present invention is not specifically restricted, it is in the range of preferably 10 to 99% by mass, more preferably 20 to 99% by mass, still more preferably 30 to 99% by mass. When the content of the reactive (meth) acrylate polymer (A) is in the above range, a curable composition capable of forming a cured product having excellent strength and flexibility can be obtained. The mass ratio of the reactive (meth)acrylate polymer (A) to other curable components such as the reactive monomer (C) (mass of (A)/mass of other curable components) is in the range of preferably 10/90 to 90/10, more preferably 40/60 to 85/15, from the viewpoint of a balance between strength and photosensitivity. If the ratio of the reactive (meth) acrylate polymer (A) is less than 10/90, film strength is lowered.

If the mass ratio of the reactive (meth) acrylate polymer (A) is more than 90/10, curing shrinkage is increased. Although the amount of the polymerization initiator (B) used is not specifically restricted, it is in the range of 0.1 to 50 parts by mass, preferably 2 to 20 parts by mass, more preferably 2 to 10 parts by mass, based on 100 parts by mass of the total of the aforesaid curable components. By setting the amount of the polymerization initiator (B) in the above range, the rate of polymerization of the reactive (meth)acrylate polymer (A), the reactive monomer (C) and the urethane oligomer (D) is increased, and the curable composition is not subject to polymerization inhibition by oxygen or the like. Moreover, with regard to the resulting cured product, high strength, adhesive strength to the substrate or the like and heat resistance can be attained, and coloring of the cured product very hardly occurs.

Although the amount of the reactive monomer (C) used is not specifically restricted, it is in the range of usually 1 to 500 parts bymass, preferably 5 to 300 parts bymass, more preferably 5 to 200 parts by mass, still more preferably 5 to 120 parts by mass, based on 100 parts by mass of the reactive (meth)acrylate polymer (A). By using the reactive monomer (C) in an amount in the above range, control of viscosity of the composition, control of curability of the composition, etc. can be readily carried out.

Although the amount of the urethane oligomer (D) used is not specifically restricted, it is in the range of usually 1 to 500 parts bymass, preferably 5 to 300 parts bymass, more preferably 5 to 200 parts by mass, still more preferably 5 to 120 parts by mass, based on 100 parts by mass of the reactive (meth)acrylate polymer (A). By using the urethane oligomer (D) in an amount in the above range, surface hardness of a cured product obtained by curing the curable composition can be controlled, and flexibility can be imparted to the cured product.

Although the amount of the silica fine particles (E) used is not specifically restricted, it is in the range of usually 5 to 1000 parts by mass, preferably 5 to 750 parts by mass, morepreferably 5 to 500 parts by mass, still more preferably 10 to 350 parts by mass, based on 100 parts by mass of the reactive (meth)acrylate polymer (A) . By using the silica fine particles (E) in an amount in the above range, surface hardness and scratch resistance of a cured product obtained by curing the curable composition can be controlled, and curing shrinkage is inhibited to impart curling resistance to the cured product. Moreover, heat resistance can be imparted to the cured product.

However, the total amount of the reactive monomer (C), the urethane oligomer (D) and the silica fine particles (E) used is not more than 900 parts by mass based on 100 parts by mass of the reactive (meth)acrylate polymer (A).

The curable composition of the present invention can be cured by, for example, applying the curable composition onto a base material to form a coating film and then irradiating the coating film with active energy rays or heating the coating film. For the curing, both of irradiation with active energy rays and heating may be carried out. Examples of the base materials include glass, plastic, metal and wood. Examples of the application methods include application by bar coater, applicator, die coater, spin coater, spray coater, curtain coater, roll coater or the like, screen printing, and dipping.

The amount of the curable composition of the present invention applied onto the basematerial is not specifically restricted and can be properly controlled according to the purpose. The amount of the curable composition applied is preferably such an amount that the thickness of the coating film for evaluation obtained after curing treatment by irradiation with active energy rays after application and drying would become 1 to 200 $\mu$m, and is more preferably such an amount that the thickness thereof would become 5 to 100 $\mu$m.

The active energy rays used for curing are preferably electron rays or lights of ultraviolet to infrared wavelength region. The light source is as follows. For example, in the case of ultraviolet rays, an extra-high pressure mercury light source or a metal halide light source is employable; in the case of visible light, a metal halide light source or a halogen light source is employable; and in the case of infrared rays, a halogen light source is employable. In addition, other light sources, such as laser and LED, are also employable. The irradiation dose of the active energy rays is properly determined according to the type of the light source, the thickness of the coating film, etc, but it can be properly determined so that

the reaction ratio of the photopolymerizable ethylenically unsaturated groups may become preferably not less than 80%, more preferably not less than 90%.

When the curing is carried out by heating, it is desirable to heat the coating film at 60 to 130˚C for 60 to 240 minutes, preferably at 70 to 125˚C for 60 to 120 minutes.

The cured product of the present invention formed as above is transparent, has excellent surface hardness, is good also in flexibility and bending properties and has strength and flexibility that are compatible with each other. Moreover, the cured product has heat resistance.

The curable composition of the present invention can be utilized for, for example, a coating material, a coating agent and an adhesive.

The cured products of the present invention can be utilized for, for example, a coating member, an optical film, an optical element, an optical waveguide, an LED sealing member, a solar cell substrate, a plastic substrate for a liquid crystal display element, a plastic substrate for an organic EL display element and a touch panel.

Examples

The present invention is described in more detail with reference to the following examples and comparative examples, but it should be construed that the present invention is in no way restricted by the description of them.

(1) Synthesis of reactive (meth)acrylate polymer (A)

Preparation Example 1: Synthesis of reactive (meth)acrylate polymer

(P-1) having unsaturated group on side chain

In a four-necked flask equipped with a dropping funnel, a thermometer, a cooling tube and a stirrer, 205.4 g of propylene glycol monomethyl ether acetate (represented by PGMAC hereinafter) was placed, and the four-necked flask was purged with nitrogen for 1 hour. The flask was heated up to 100˚C in an oil bath, and then a mixed liquid of 24.9 g of 2- (2-methacryloyloxy) ethoxyethyl isocyanate, 19.4 g of 2-methacryloyloxyethyl isocyanate and 5.6 g of dimethyl-2,2-azobis(2-methylpropionate) (represented by V-601 hereinafter) was dropwise added over a period of 2 hours. Thereafter, stirring was continued for 30 minutes, and then a mixed liquid of 0.9 g of V-601 and 2.7 g of PGMAC was added, followed by stirring for 3 hours. Thereafter, the temperature was further raised to 120˚C, and polymerization was carried out for 1 hour, followed by cooling down to 40˚C. After the atmosphere in the flask was replaced with air, 0.2 g of 3,5-tertiary-butyl-4-hydroxytoluene was added as a polymerization inhibitor. After stirring for 3 minutes, to this solution were added 0.3 g of dibutyltin dilaurate, 23.5 g of 2-hydroxyethyl acrylate and 3. 7 g of 1-butanol, followed by stirring for 1 hour. Here, by the use of an infrared spectrometer, it was confirmed that a peak at 2250 $cm^{-1}$ characteristic of isocyanate had disappeared, and the reaction was completed. Thus, a reactive (meth) acrylate polymer (P-1) having an unsaturated group on the side chain was synthesized. The weight-average molecular weight of this polymer in terms of polystyrene, as measured by GPC, was 5,300.

In this case, the copolymerization ratio of the isocyanate compound is determined in the following manner:

Copolymerization ratio =

(amount (mol) of all isocyanate compounds)/(amount (mol) of all monomers)

$$= \frac{\{24.9(g)/199.2(g/mol)\}+\{19.4(g)/155.15(g/mol)\}}{\{24.9(g)/199.2(g/mol)\}+\{19.4(g)/155.15(g/mol)\}} \times 100$$

$$= \boxed{100(\%)}$$

The double bond equivalent is determined in the following manner:

Double bond equivalent =

(mass (g) of all monomers + mass (g) of initiator + mass (g) of all alcohols)/(amount (mol) of unsaturated group-containing alcohol used in reaction with polymer × number of unsaturated groups in unsaturated group-containing alcohol)

$$= \frac{\{24.9(g) + 19.4(g)\} + \{5.9(g) + 0.9(g)\} + \{23.5(g) + 3.7(g)\}}{23.5(g) / 116.12(g/mol)}$$

$$= \boxed{386.9(g/mol)}$$

The urethane equivalent is determined in the following manner:

Urethane equivalent =

(mass (g) of all monomers + mass (g) of initiator + Mass (g) of all alcohols)/(amount (mol) of alcohol used in reaction with polymer)

$$= \frac{\{24.9(g) + 19.4(g)\} + \{5.9(g) + 0.9(g)\} + \{23.5(g) + 3.7(g)\}}{\{23.5(g) / 116.12(g/mol)\} + \{3.7(g) / 74.1(g/mol)\}}$$

$$= \boxed{310.3(g/mol)}$$

In the following Preparation Examples 2 to 4, the copolymerization ratio, the double bond equivalent and the urethane equivalent were determined in the same manner as above, and the copolymerization ratio, the double bond equivalent and the urethane equivalent of the reactive (meth)acrylate polymers (A) used in the examples are set forth in Table 1.

Preparation Example 2: Synthesis of reactive (meth)acrylate polymer (P-2) having unsaturated group on side chain

In a four-necked flask equipped with a dropping funnel, a thermometer, a cooling tube and a stirrer, 208.9 g of PGMAC was placed, and the four-necked flask was purged with nitrogen for 1 hour. The flask was heated up to 100˚C in an oil bath, and then a mixed liquid of 45.8 g of 2-(2-methacryloyloxy)ethoxyethyl isocyanate and 5.5 g of V-601 was dropwise added over a period of 2 hours. Thereafter, stirring was continued for 30 minutes, and then a mixed liquid of 0.9 g of V-601 and 2.7 g of PGMAC was added, followed by stirring for 3 hours. Thereafter, the temperature was further raised to 120˚C, and polymerization was carried out for 1 hour, followed by cooling down to 40˚C. After the atmosphere in the flask was replaced with air, 0.2 g of 3,5-tertiary-butyl-4-hydroxytoluene was added as a polymerization inhibitor. After stirring for 3 minutes, to this solution were added 0.3 g of dibutyltin dilaurate and 27.0 g of 2-hydroxyethyl acrylate,

followed by stirring for 1 hour. Here, by the use of an infrared spectrometer, it was confirmed that a peak at 2250 $cm^{-1}$ characteristic of isocyanate had disappeared, and the reaction was completed. Thus, a reactive (meth) acrylate polymer (P-2) having an unsaturated group on the side chain was synthesized. The weight-averagemolecularweight of this polymer in terms of polystyrene, as measured by GPC, was 5,200.

Preparation Example 3: Synthesis of reactive (meth)acrylate polymer (P-3) having unsaturated group on side chain and alicyclic skeleton

In a four-necked flask equipped with a dropping funnel, a thermometer, a cooling tube and a stirrer, 210.1 g of PGMAC was placed, and the four-necked flask was purged with nitrogen for 1 hour. The flask was heated up to 100˚C in an oil bath, and then a mixed liquid of 28.4 g of 2-(2-methacryloyloxy)ethoxyethyl isocyanate, 33.4 g of tricyclodecanyl methacrylate and 5.5 g of V-601 was dropwise added over a period of 2 hours. Thereafter, stirring was continued for 30 minutes, and then a mixed liquid of 1.2 g of V-601 and 3.6 g of PGMAC was added, followed by stirring for 3 hours. Thereafter, the temperature was further raisedto 120˚C, and polymerization was carried out for 1 hour, followed by cooling down to 40˚C. After the atmosphere in the flask was replaced with air, 0.2 g of 3,5-tertiary-butyl-4-hydroxytoluene was added as a polymerization inhibitor. After stirring for 3 minutes, to this solution were added 0.4 g of dibutyltin dilaurate and 16.6 g of 2-hydroxyethyl acrylate, followed by stirring for 1 hour. Here, by the use of an infrared spectrometer, it was confirmed that a peak at 2250 $cm^{-1}$ characteristic of isocyanate had disappeared, and the reaction was completed. Thus, a reactive (meth) acrylate polymer (P-3) having an unsaturated group on the side chain and an alicyclic skeleton was synthesized. The weight-average molecular weight of this polymer in terms of polystyrene, as measured by GPC, was 5,600.

Preparation Example 4: Synthesis of reactive (meth)acrylate polymer (P-4) having unsaturated group on side chain

In a four-necked flask equipped with a dropping funnel, a thermometer, a cooling tube and a stirrer, 210. 1g of PGMAC was placed, and the four-necked flask was purged with nitrogen for 1 hour. The flask was heated up to 100˚C in an oil bath, and then a mixed liquid of 24.9 g of 2- (2-methacryloyloxy) ethoxyethyl isocyanate, 19.4 g of 2-methacryloyloxyethyl isocyanate and 7.3 g of V-601 was dropwise added over a period of 2 hours. Thereafter, stirring was continued for 30 minutes, and then a mixed liquid of 0.9 g of V-601 and 2.7 g of PGMAC was added, followed by stirring for 3 hours. Thereafter, the temperature was further raised to 120˚C, and polymerization was carried out for 1 hour, followed by cooling down to 40˚C. After the atmosphere in the flask was replaced with air, 0.2 g of 3,5-tertiary-butyl-4-hydroxytoluene was added as a polymerization inhibitor. After stirring for 3 minutes, to this solution were added 0.4 g of dibutyltin dilaurate and 29.0 g of 2-hydroxyethyl acrylate, followed by stirring for 1 hour. Here, by the use of an infrared spectrometer, it was confirmed that a peak at 2250 $cm^{-1}$ characteristic of isocyanate had disappeared, and the reaction was completed. Thus, a reactive (meth) acrylate polymer (P-4) having an unsaturated group on the side chain was synthesized. The weight-average molecular weight of this polymer in terms of polystyrene, as measured by GPC, was 8,000.

Preparation Example 5: Synthesis of reactive (meth)acrylate polymer (P-5) having unsaturated group on side chain

In a four-necked flask equipped with a dropping funnel, a thermometer, a cooling tube and a stirrer, 210.8 g of PGMAC was placed, and the four-necked flask was purged with nitrogen for 1 hour. The flask was heated up to 100˚C in an oil bath, and then a mixed liquid of 55.9 g of 8-methacryloxy-3,6-dioxaoctyl isocyanate and 5.5 g of V-601 was dropwise added over a period of 2 hours. Thereafter, stirring was continued for 30 minutes, and then a mixed liquid of 0.9 g of V-601 and 2.7 g of PGMAC was added, followed by stirring for 3 hours. Thereafter, the temperature was further raised to 120˚C, and polymerization was carried out for 1 hour, followed by cooling down to 40˚C. After the atmosphere in the flask was replaced with air, 0.2 g of 3,5-tertiary-butyl-4-hydroxytoluene was added as a polymerization inhibitor. After stirring for 3 minutes, to this solution were added 0.3 g of dibutyltin dilaurate and 27.0 g of 2-hydroxyethyl acrylate, followed by stirring for 1 hour. Here, by the use of an infrared spectrometer, it was confirmed that a peak at 2250 $cm^{-1}$ characteristic of isocyanate had disappeared, and the reaction was completed. Thus, a reactive(meth)acrylate polymer (P-5) having an unsaturated group on the side chain was synthesized. The weight-average molecular weight of this polymer in terms of polystyrene, as measured by GPC, was 5,600.

(2) Preparation of curable composition

Examples 1 to 10

The reactive compounds (reactive (meth)acrylate polymer (A), reactive monomer (C) shown in Table 2, urethane

oligomer (D)) and a polymerization initiator (B) were stirred in proportions shown in Table 1 at ordinary temperature to homogeneously mix them, whereby curable compositions, namely evaluation samples of Examples 1 to 10, were obtained.

Comparative Example 1

91 Parts of a reactive monomer (M-1), 9 parts of a reactive monomer (M-2), 3 parts of a photopolymerization initiator (D1173) and 2 parts of a photopolymerization initiator (MBF) were mixed at room temperature to prepare a curable composition as a composition containing no reactive (meth) acrylate polymer (A) as opposed to Example 1. The formulation of the curable composition is set forth in Table 1.

Comparative Example 2

A reactive (meth)acrylate polymer (I-1) having an unsaturated group on the side chain was synthesized in the same manner as in Preparation Example 4, except that 38.8 g of 2-methacryloyloxyethyl isocyanate only was used instead of 24.9 g of 2-(2-methacryloyloxy)ethoxyethyl isocyanate and 19.4 g of 2-methacryloyloxyethyl isocyanate. The weight-average molecular weight of the resulting polymer in terms of polystyrene, as measured by GPC, was 8,000. Then, a curable composition (Comparative Example 2) was prepared in the same manner as in Example 2, except that the reactive (meth)acrylate polymer (I-1) obtained above was used instead of the reactive (meth)acrylate polymer (P-2). The formulation of the curable composition is set forth in Table 1.

Comparative Example 3

Into a toluene solvent containing 200 ppm of 2,6-di-tert-butyl-4-methylphenol (BHT, available from Junsei Chemical Co., Ltd.), 100 g of BPX-33 (available from ADEKA CORPORATION) as bisphenol type polyol, 76 g of isophorone diisocyanate (available from Tokyo Chemical Industry Co., Ltd.) as polyisocyanate and 40 g of 2-hydroxyethyl acrylate (available from Osaka Organic Chemical Industry Ltd.) were introduced all together, then 0. 054 g of dibutyltin dilaurate (available from Tokyo Chemical Industry Co., Ltd.) was added, and they were reacted at 70˚C for 10 hours. Using 200 g of hexane containing 200 ppm of BHT, washing was carried out four times to obtain polyurethane acrylate (H-1). Then, 75 parts of the resulting polyurethane acrylate (H-1), 25 parts of AMP-60G (available from Shin-Nakamura Chemical Co., Ltd.) as a reactive monomer, 3 parts of a photopolymerization initiator (D1173) and 2 parts of a photopolymerization initiator (MBF) were mixed at room temperature to prepare a curable composition. The formulation of the curable composition is set forth in Table 1.

Comparative Example 4

307.8 g of polyester diol A (co-condensate of adipic acid and 1,4-butanediol, molecular weight: 500.9, hydroxyl value: 2240 KOH mg/g), 16.2 g of organic modified polysiloxane (trade name: BYK370, active ingredient: 25%, available from BYK-Chemie GmBH) and 288.1 g of 1,3-bis(isocyanatomethyl)cyclohexane (trade name: Takenate, available from Takeda Pharmaceutical Co., Ltd.) were prepared, and with stirring them, they were heated up to 80˚C over a period of 1.5 hours. After the temperature was maintained at 80˚C for 1 hour, 0.175 g of stannous octylate was added, and the reaction was further carried out for 1.5 hours. Thereafter, the reaction system was cooled down to 40˚C, and 194.3 g of 2-hydroxyethyl acrylate was dropwise added over a period of 1. 5 hours. Thereafter, the temperature was maintained at 75 to 80˚C for 1 hour, then 0.175 g of stannous octylate was added, and the temperature was maintained at the same temperature for 1.5 hours to obtain polyurethane acrylate (H-2). Then, 70 parts of the resulting polyurethane acrylate (H-2), 20 parts of 2-ethylhexyl acrylate as a reactive monomer, 10 parts of N-vinylpyrrolidone, 3 parts of a photopolymerization initiator (D1173) and 2 parts of a photopolymerization initiator (MBF) were mixed at room temperature to prepare a curable composition. The formulation of the curable composition is set forth in Table 1.

Table 1

| | | Formulation (part(s) by mass) | | | | | | | | | | | | | |
|---|---|---|---|---|---|---|---|---|---|---|---|---|---|---|---|
| | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 | Comp. Ex. 3 | Comp. Ex. 4 |
| Reactive urethane (meth)acrylate polymer (A) | P-1 | 45 | | | | | | | | | | | | | |
| | P-2 | | 45 | | | | | | | | | | | | |
| | P-3 | | | | | | | | | | | | | | |
| | P-4 | | | 45 | 45 | 50 | 43 | 36 | 30 | 45 | | | | | |
| | P-5 | | | | | | | | | | 45 | | | | |
| Reactive urethane (meth)acrylate polymer (I) | 1-1 | | | | | | | | | | | | 45 | | |
| Polyurethane acrylate (H) | H-1 | | | | | | | | | | | | | 75 | |
| | H-2 | | | | | | | | | | | | | | 70 |
| Reactive monomer (C) | M-1 | 50 | 50 | 50 | 50 | 50 | 50 | 50 | 50 | 50 | 50 | 91 | 50 | | |
| | M-2 | 5 | 5 | 5 | 5 | | | | | | 5 | 9 | 5 | | |
| | M-3 | | | | | | | | | 5 | | | | | |
| | AMP-60G | | | | | | | | | | | | | 25 | |
| | 2HEA | | | | | | | | | | | | | | 20 |
| | NVP | | | | | | | | | | | | | | 10 |
| Urethane oligomer (D) | UA122P | | | | | | 7 | 14 | 20 | | | | | | |
| Polymerization initiator (B) | D1173 | 3 | 3 | 3 | 3 | 3 | 3 | 3 | 3 | 3 | 3 | 3 | 3 | 3 | 3 |
| | MBF | 2 | 2 | 2 | 2 | 2 | 2 | 2 | 2 | 2 | 2 | 2 | 2 | 2 | 2 |
| Copolymerization ratio | | 100 | 100 | 48.5 | 100 | 100 | 100 | 100 | 100 | 100 | 100 | - | 100 | - | - |
| Double bond equivalent | | 386.9 | 340.6 | 595.3 | 326.3 | 326.3 | 326.3 | 326.3 | 326.3 | 326.3 | 384.1 | - | 304.3 | - | - |
| Urethane equivalent | | 310.3 | 340.6 | 595.3 | 326.3 | 326.3 | 326.3 | 326.3 | 326.3 | 326.3 | 384.1 | - | 304.3 | - | - |

UA122P: available from Shin-Nakamura Chemical Co., Ltd., trade name: UA-122P, urethane acrylate oligomer
D1173: available from Ciba Specialty Chemicals Inc. , trade name: DAROCURE 1173, photopolymerization initiator
MBF: available from Ciba Specialty Chemicals Inc., trade name: DAROCURE MBF, photopolymerization initiator
2HEA: available from Wako Pure Chemical Industries, Ltd., 2-ethylhexyl acrylate
NVP: available from Wako Pure Chemical Industries, Ltd., N-vinylpyrrolidone
Table 2

| | Reactive monomer |
|---|---|
| M-1 | 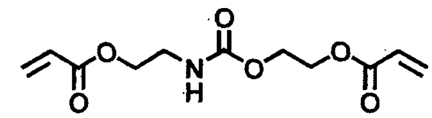 |
| M-2 | 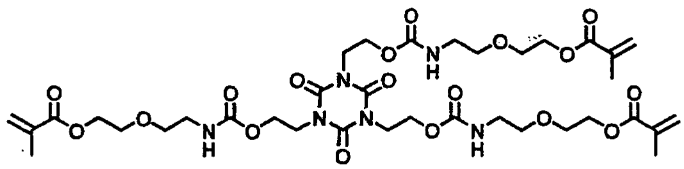 |
| M-3 | 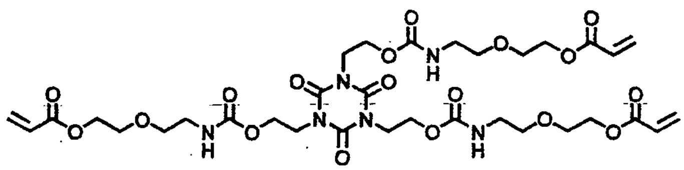 |

(3) Preparation of curable composition containing silica fine particles (E)

Examples 11 to 16

100 g of isopropyl alcohol-dispersed type colloidal silica (silica content: 30% by mass, number-average particle diameter: 10 to 20 nm, trade name: Snowtec IPA-ST, available from Nissan Chemical Industries, Ltd.) was mixed with 5.4 g of γ-methacryloyloxypropyltrimethoxysilane and 3.6 g of phenyltrimethoxysilane. To the mixture was further added 2.9 g of a 0.05N HCl solution, and they were stirred at 20˚C for 24 hours to carry out surface treatment of silica fine particles (E).

Next, 66.7 g of trimethylolpropane triacrylate (trade name: Biscoat #295, available from Osaka Organic Chemical Industry Ltd.) as a reactive monomer M-4 and 13.3 g of dicyclopentadienyl diacrylate (trade name: Light Acrylate DCP-A, available from Kyoeisha Chemical Co., ltd.) as a reactive monomer M-5 were homogeneously mixed. Thereafter, with stirring the mixture, a volatile component was removed at 40˚C under reduced pressure. The amount of the volatile component removed was 71.0 g. The resulting mother liquor was subjected to pressure filtration (pressure: 0.2 MPa) using a membrane filter (pore diameter: 1.2 μm).

To 100 g of the resulting filtratre, the reactive (meth)acrylate polymer (A) P-4, the reactive monomer (C) M-1, the urethane oligomer (D) U-122P, the silica fine particles (E) and the polymerization initiator (B) were added in proportions shown in Table 4, and they were stirred at ordinary temperature to mix them homogenously. Thus, curable compositions, namely evaluation samples of Examples 11 to 16, were obtained.

(4) Sample evaluation

Methods of sample evaluation are described below. The evaluation results are set forth in Table 3 and Table 5.

Preparation of cured film

The curable composition solutions of Examples 1 to 16 and Comparative Example 1 to 4 shown in Table 1 and Table 4 were applied to different glass plates (50 mm × 50 mm), respectively, so that the thickness of the cured film would become 100 μm. Then, the resulting coating films were exposed to light at 1 J/$cm^2$ using an exposure device in which an extra-high pressure mercury lamp had been incorporated, to cure the coating films.

Pencil hardness

In accordance with JIS-K5600, the cured films obtained in the above "Preparation of cured film" were each scratched with Uni (registered trademark, available from Mitsubishi Pencil Co., Ltd.) in such a manner that the angle between the pencil and the cured film became 45 degrees, and a pencil having the highest hardness which made no scratch mark was determined. The hardness of the pencil was taken as a pencil hardness, and the results are set forth in Table 3 and Table 5.

Evaluation of Photo-curability

The curable composition solutions of Examples 1 to 16 and Comparative Example 1 to 4 shown in Table 1 and Table 4 were applied to different glass plates (size: 50 mm × 50 mm) , respectively. Then, the resulting coating films were photo-cured using an exposure device (trade name: Multilight ML-251A/B, manufactured by Ushio Inc.) in which an extra-high pressure mercury lamp had been incorporated, with varying the amount of exposure. When the integrated amount of exposure was increased, an amount of exposure by which the coating film became tack-free was determined. This amount of exposure was taken as an indication of curability, and the results are set forth in Table 3 and Table 5.

Tg, Storage elastic modulus

Measurement was carried out by the use of a dynamic viscoelasticity measuring apparatus (DMA). The cured films obtained in the above "Preparation of cured film" were each cut into a specimen having a width of 10 mm, and a storage elastic modulus (E') and tan δ were measured at a gap distance of 10 mm using DMA (manufactured by SII Nano Technology Inc., viscoelasticity spectrometer EXSTAR6000 DMS) in a tensile mode under the conditions of a heating rate of 2˚C /min, a measuring range of 20 to 300˚C and a frequency of 10.0 Hz. The glass transition temperature Tg was determined from the peak temperature of tan δ . As the storage elastic modulus, a value at 200˚C was determined. The results are set forth in Table 3 and Table 5.

As the storage elastic modulus at 200˚C is higher, the heat resistance is better. The storage elastic modulus at 200˚C is preferably not less than $5.0 \times 10^8$ Pa, more preferably not less than $1.0 \times 10^9$ Pa, still more preferably not less than $1.5 \times 10^9$ Pa. In the case where the cured product is used for, for example, a substrate for a solar cell, a substrate for a liquid crystal display element or a substrate for an organic EL display element, a storage elastic modulus at 200˚C of less than $5.0 \times 10^8$ Pa is undesirable because the substrate is liable to be deflected by its own weight and has poor flatness occasionally.

Elongation at break, elastic modulus

The cured films obtained in the above "Preparation of cured film" were each cut into a strip (5 mm × 30 mm). The strip was extended by the use of a desk top small tester (EZ-test, manufactured by Shimadzu Corporation) under the conditions of a gap distance of 15 mm and a stress rate of 5 mm/min in accordance with JIS-K7127 to measure an elongation at break and an elastic modulus at the beginning of extension. The results are set forth in Table 3 and Table 5.

Flexing resistance

The cured films obtained in the above "Preparation of cured film" were each wound round a cylindrical metal bar having a diameter of 1 mm and a cylindrical metal bar having a diameter of 2 mm, and occurrence of a crack of each cured film was visually observed. This test was carried out five times, and evaluation was carried out by the number of times of occurrence of a crack.

The evaluation criteria are as follows, and the evaluation results are set forth in Table 3 and Table 5.

A: A crack does not occur at all.
B: A crack occurs only once or twice.
C: A crack occurs three or four times.
D: A crack occurs every time.

Scratch resistance

The surfaces of the cured films obtained in the above "Preparation of cured film" were each rubbed with steel wool of #0000 back and forth 10 times under application of a load of 175 g/cm$^2$ at a stroke of 25 mm and a rate of 30 mm/sec, and then presence of a scratch mark on the surface was visually observed.

The evaluation criteria are as follows, and the evaluation results are set forth in Table 5.

A: A scratch mark is not observed at all.

B: Fine scratch marks (5 or less) are observed.

C: Coarse scratch marks (5 or less) are observed.

D: A large number of coarse scratch marks are observed.

(5) Evaluation results

Table 3

| | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 | Comp. Ex. 3 | Comp. Ex. 4 |
|---|---|---|---|---|---|---|---|---|---|---|---|---|---|---|---|
| Evaluation results | Pencil hardness | 3H | 3H | 2H | 3H | 3H | 3H | 3H | 2H | 3H | 3H | 3H | 3H | 8B | B |
| | Photocurability evaluation | <200 | <200 | <200 | <200 | <150 | <200 | <200 | <200 | <150 | <200 | <200 | <200 | <200 | <200 |
| | Tg (°C) | 132 | 141 | 138 | 147 | 150 | 145 | 136 | 127 | 145 | 139 | 170 | 165 | 40 | 83 |
| | Elongation at break (%) | 1.8 | 2.8 | 4.1 | 4.6 | 2.7 | 2.2 | 2.5 | 12.5 | 4.6 | 3.2 | 1.5 | 1.6 | 70.0 | 30.0 |
| | Elastic modulus (GPa) | 2.7 | 2.6 | 2.3 | 2.2 | 2.7 | 2.3 | 2.5 | 2.6 | 2.2 | 2.5 | 3.3 | 3.2 | 0.9 | 1.3 |
| | Flexing resistance | A | A | A | A | A | A | A | A | A | A | C | C | A | A |

Table 4

| | | Formulation (part(s) by mass) | | | | | |
|---|---|---|---|---|---|---|---|
| | | Ex. 11 | Ex. 12 | Ex. 13 | Ex. 14 | Ex. 15 | Ex. 16 |
| Reactive urethane (meth)acrylate polymer (A) | P-4 | 21 | 18 | 15 | 25 | 20 | 15 |
| Reactive monomer (C) | M-1 | 35 | 30 | 25 | 25 | 20 | 15 |
| | M-2(trimethylolpropane triacrylate) | 15 | 20 | 25 | 22.5 | 27 | 31.5 |
| | M-3(cyclopentadienyl diacrylate) | 3 | 4 | 5 | 4.5 | 5.4 | 6.3 |
| Urethane oligomer (D) | | 14 | 12 | 10 | 0 | 0 | 0 |
| Silica fine particles (E) | | 12 | 16 | 20 | 18 | 21.6 | 25.2 |
| Silane compound (F) | γ-methacryloyloxypropyltrimethoxysil | 2.16 | 2.88 | 3.6 | 3.24 | 3.89 | 4.54 |
| Silane compound (G) | phenyltrimethoxysilane | 1.44 | 1.92 | 2.4 | 2.16 | 2.59 | 3.02 |
| Polymerization initiator (B) | D1173 | 3 | 3 | 3 | 3 | 3 | 3 |
| | MBF | 2 | 2 | 2 | 2 | 2 | 2 |
| Copolymerization ratio | | 100 | 100 | 100 | 100 | 100 | 100 |
| Double bond equivalent | | 326.2 | 326.2 | 326.2 | 326.2 | 326.2 | 326.2 |
| Urethane equivalent | | 326.3 | 326.3 | 326.3 | 326.3 | 326.3 | 326.3 |

Table 5

| | | Ex. 11 | Ex. 12 | Ex. 13 | Ex. 14 | Ex. 15 | Ex. 16 |
|---|---|---|---|---|---|---|---|
| Evaluation results | Pencil hardness | 2H | 3H | 5H | 5H | 5H | 5H |
| | Scratch resistance | A | A | A | A | A | A |
| | Photo-curability evaluation | <200 | <200 | <200 | <200 | <200 | <200 |
| | Tg (˚C) | 144 | 160 | 165 | 159 | 165 | 162 |
| | Elongation at break (%) | 10 | 7.9 | 4.3 | 4.1 | 4 | 4 |
| | Elastic modulus (GPa) | 2.7 | 2.9 | 3.1 | 3.2 | 3.3 | 3.4 |
| | Storage elastic modulus at 200˚C (Pa) | $5.0\times10^8$ | $6.0\times10^8$ | $8.8\times10^8$ | $7.5\times10^8$ | $1.3\times10^9$ | $1.8\times10^9$ |
| | Flexing resistance | A | A | A | A | A | A |

## Claims

1. A curable composition comprising a reactive (meth) acrylate polymer (A) having a monomer unit represented by the following formula (1) , a polymerization initiator (B) and a reactive monomer (C),

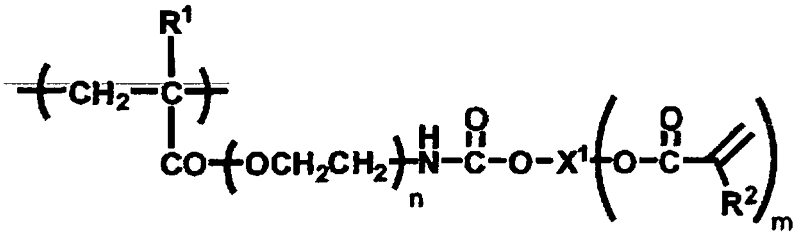

(1)

wherein $R^1$ is a hydrogen atom, a methyl group or an ethyl group, $R^2$ is a hydrogen atom or a methyl group, $X^1$ is a straight-chain or branched hydrocarbon group of 2 to 6 carbon atoms or an alcohol residue of polyethylene glycol, polypropylene glycol or caprolactone-modified both-terminal diol, n is an integer of 2 to 4, and m is an integer of 1 to 5.

**2.** The curable composition as claimed in claim 1, wherein the monomer unit represented by the formula (1) is a monomer unit represented by the following formula (2):

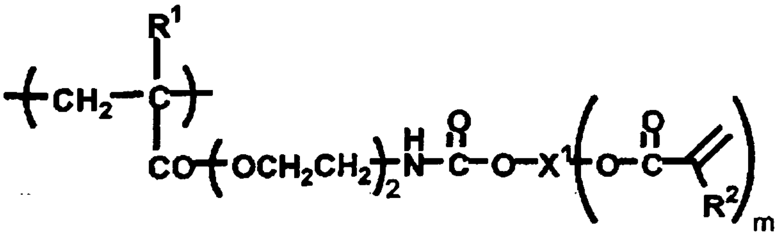

(2)

wherein $R^1$, $R^2$, $X^1$ and m have the same meanings as those of $R^1$, $R^2$, $X^1$ and m in the formula (1).

**3.** The curable composition as claimed in claim 2, wherein the monomer unit represented by the formula (1) is a monomer unit represented by any one of the following formulas (3) to (5),

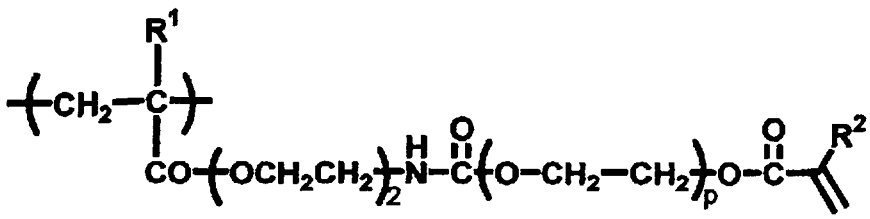

(3)

wherein $R^1$ and $R^2$ have the same meanings as those of $R^1$ and $R^2$ in the formula (1), and p is an integer of 1 to 30,

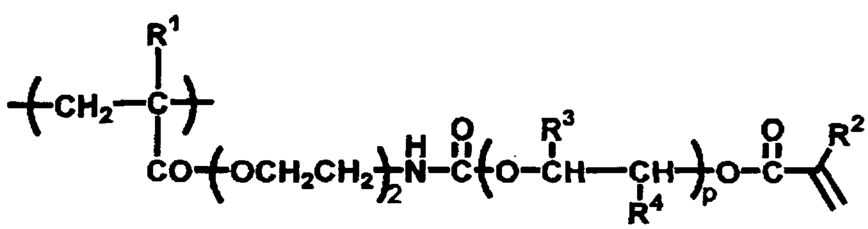

(4)

wherein $R^1$ and $R^2$ have the same meanings as those of $R^1$ and $R^2$ in the formula (1), $R^3$ and $R^4$ are each inde-

pendently a methyl group or a hydrogen atom, $R^3$ and $R^4$ do not become the same groups, and p is an integer of 1 to 30,

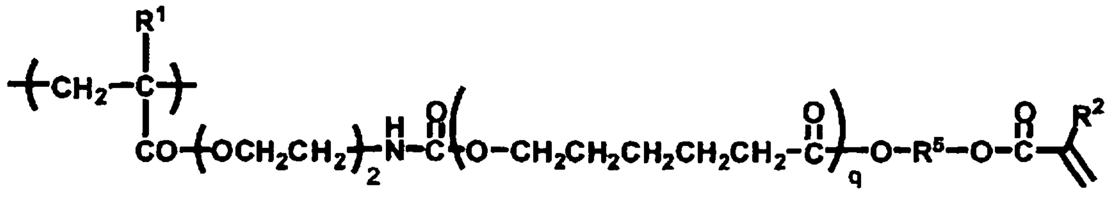

(5)

wherein $R^1$ and $R^2$ have the same meanings as those of $R^1$ and $R^2$ in the formula (1), $R^5$ is a straight-chain or branched alkylene group of 2 to 4 carbon atoms, and q is an integer of 1 to 30.

**4.** The curable composition as claimed in any one of claims 1 to 3, which further comprises a urethane oligomer (D).

**5.** The curable composition as claimed in claim 4, wherein the urethane oligomer (D) is contained in an amount of 1 to 500 parts by mass based on 100 parts by mass of the reactive (meth)acrylate polymer (A).

**6.** The curable composition as claimed in any one of claims 1 to 5, which further comprises silica fine particles (E) having a number-average particle diameter of 1 to 100 nm.

**7.** The curable composition as claimed in claim 6, wherein the silica fine particles (E) have been surface-treated with at least one compound selected from the group consisting of a silane compound (F) represented by the formula (6) and a silane compound (G) having an aromatic ring structure and represented by the formula (7),

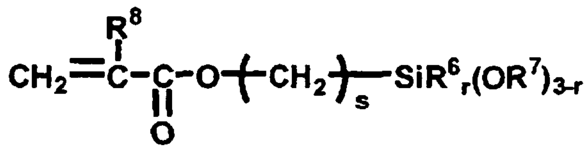

(6)

wherein $R^8$ is a hydrogen atom or a methyl group, $R^6$ is alkyl group of 1 to 3 carbon atoms or a phenyl group, $R^7$ is a hydrogen atom or a hydrocarbon residue of 1 to 10 carbon atoms, s is an integer of 1 to 6, and r is an integer of 0 to 2,

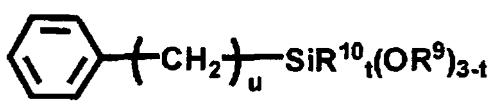

(7)

wherein $R^{10}$ is an alkyl group of 1 to 3 carbon atoms or a phenyl group, $R^9$ is a hydrogen atom or a hydrocarbon residue of 1 to 10 carbon atoms, u is an integer of 0 to 6, and t is an integer of 0 to 2.

**8.** The curable composition as claimed in claim 6 or 7, wherein the silica fine particles (E) are contained in an amount of 5 to 1000 parts by mass based on 100 parts by mass of the reactive (meth) acrylate polymer (A).

**9.** The curable composition as claimed in any one of claims 1 to 8, wherein the polymerization initiator (B) is contained in an amount of 0.1 to 50 parts by mass based on 100 parts by mass of the total of the curable components.

**10.** The curable composition as claimed in any one of claims 1 to 9, wherein the reactive monomer (C) is contained in an amount of 1 to 500 parts by mass based on 100 parts by mass of the reactive (meth) acrylate polymer (A).

**11.** The curable composition as claimed in any one of claims 1 to 10, wherein the reactive (meth) acrylate polymer (A) has a double bond equivalent of not more than 1000 g/mol but not less than 200 g/mol.

**12.** A coating material comprising the curable composition as claimed in any one of claims 1 to 11.

**13.** An adhesive comprising the curable composition as claimed in any one of claims 1 to 11.

**14.** A cured product obtained by curing the curable composition as claimed in any one of claims 1 to 11.

**15.** A coating member obtained by curing the curable composition as claimed in any one of claims 1 to 11.

**16.** An optical film obtained by curing the curable composition as claimed in any one of claims 1 to 11.

**17.** An optical element obtained by curing the curable composition as claimed in any one of claims 1 to 11.

**INTERNATIONAL SEARCH REPORT**

International application No.
PCT/JP2009/059265

A. CLASSIFICATION OF SUBJECT MATTER
*C08F290/12*(2006.01)i, *C08F8/00*(2006.01)i, *C08G18/67*(2006.01)i, *C09D4/00*(2006.01)i, *C09D133/00*(2006.01)i, *C09D151/08*(2006.01)i, *C09D175/14*(2006.01)i, *C09J4/00*(2006.01)i, *C09J133/00*(2006.01)i, *C09J151/08*(2006.01)i,

B. FIELDS SEARCHED

Minimum documentation searched (classification system followed by classification symbols)
C08F290/12, C08F8/00, C08G18/67, C09D4/00, C09D133/00, C09D151/08, C09D175/14, C09J4/00, C09J133/00, C09J151/08, C09J175/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-331932 A (Showa Denko Kabushiki Kaisha), 02 December, 2005 (02.12.05), Claims; Par. Nos. [0001], [0006], [0028] & WO 2005/103822 A2 & EP 1741006 A1 & US 2007/0218305 A1 & KR 10-2007-0001191 A & CN 101073037 A | 1-17 |
| E,X | JP 2009-175244 A (Hitachi Chemical Co., Ltd.), 06 August, 2009 (06.08.09), Claims; Par. Nos. [0001], [0005], [0015], [0016], [0020] to [0027], [0053], [0067] (Family: none) | 1-3,9,10,14, 16,17 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 August, 2009 (12.08.09) | 25 August, 2009 (25.08.09) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/059265

Continuation of A. CLASSIFICATION OF SUBJECT MATTER
(International Patent Classification (IPC))

*C09J175/14*(2006.01)i

(According to International Patent Classification (IPC) or to both national classification and IPC)

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6329738 A
- JP 8259644 A
- JP 2547087 B
- JP 10298252 A
- JP 9157315 A